# EUROPEAN PATENT SPECIFICATION

(11) **EP 4 562 390 B1**
(45) Date of publication and mention of the grant of the patent: **18.11.2026**
(21) Application number: 23754419.2
(22) Date of filing: 26.07.2023
(51) Int. Cl.: G01N 1/00, G01N 1/28

(54) **AGRICULTURAL SAMPLE PACKAGING SYSTEM**
VERPACKUNGSSYSTEM FÜR LANDWIRTSCHAFTLICHE PROBEN
SYSTÈME D'EMBALLAGE D'ÉCHANTILLONS AGRICOLES

(30) Priority: 28.07.2022 US 202263369722 P; 29.07.2022 US 202263369765 P; 01.08.2022 US 202263369988 P; 09.03.2023 US 202363489209 P; 14.07.2023 WO PCT/IB2023/057236
(43) Date of publication of application: 04.06.2025
(73) Proprietor: Precision Planting LLC, Tremont, IL 61568 (US)
(72) Inventor: KAISER, Jesse, Tremont, Illinois 61568 (US); KOCH, Dale, Tremont, Illinois 61568 (US)
(74) Representative: AGCO Intellectual Property Department
(86) International application number: PCT/IB2023/057580
(87) International publication number: WO 2024/023730

(56) References cited:
- WO-A1-2017/205748
- US-A1- 2014 251 032
- US-A1- 2018 080 914
- US-A1- 2021 016 286

## Description

### CROSS REFERENCE TO RELATED APPLICATIONS

### BACKGROUND

The present disclosure relates generally to agricultural sampling and analysis, and more particularly to a system for packaging and tracking an agricultural sample such as soil for chemical analysis.

Periodic soil testing is an important aspect of the agricultural arts. Test results provide valuable information on the chemical makeup of the soil such as plant-available nutrients and other important properties (e.g., levels of nitrogen, magnesium, phosphorous, potassium, pH, etc.) so that various amendments may be added to the soil to maximize the quality and quantity of crop production.

In some existing soil sampling processes, collected bulk agricultural samples such as soil or other agricultural materials may require some form of packaging to facilitate transport and further preparation and processing for eventual chemical analysis. The packaging further protects the integrity of the samples until processed. In addition, a means for tracking where samples were collected from in the agricultural field is necessary to associate the chemical analysis results with a particular portion of the field.

### BRIEF SUMMARY

The inventions provides for an agricultural sample packaging apparatus according to claim 1. The present disclosure provides an automated programmable processor-controlled agricultural sample packaging system and related methods for containerizing an agricultural sample. In some embodiments, the container or canister may be a cylindrical sample tube capped at both ends. The sample may be a soil sample in some non-limiting embodiments, or other agricultural-related materials described further herein. The packaging system may comprise a sample packaging apparatus which generally receives bulk soil sample material collected by an automated sample collection device/probe or manually, grinds the bulk material which may be in form of soil cores to reduce its particle size via a grinder, and compacts the loose ground material into an empty sample container via a compactor. The container may then be capped and transferred for further processing and eventual chamber analysis.

The packaging apparatus may be configured for mounting to a mobile vehicle of any type which travels across the agricultural field to collect soil samples in one embodiment. The samples may be processed and containerized at the location in the field where they are collected. An RFID (radio frequency identification) system of the apparatus reads a unique container RFID tag identifier for the container and writes the GPS (global positioning system) coordinates to the tag to associate the sample collection location with each sample.

The sample grinding and containerization process may be partially or fully automatically controlled by a programmable system controller which communicates with multiple sensors which monitor the operation and position of the various components of the packaging equipment to control its operation. The system may implement sample tracking routines comprising writing the GPS coordinates to the unique tracking RFID associated with each sample container which can be correlated to the location in the agricultural field or elsewhere where the sample was obtained.

Although the agricultural sample packaging system may be described herein with reference to containerizing soil samples which represents only a single category of use for the disclosed embodiments, it is to be understood that the same packaging systems including the apparatuses and related processes may further be used for processing other types of agricultural related samples including without limitation vegetation/plant, forage, manure, feed, milk, or other types of samples. The disclosure herein should therefore be considered broadly as an agricultural sample packaging system amenable for extracting and containerizing many different types of samples from bulk "as collected" sample material regardless of the method for collection. Accordingly, the present agricultural sample packaging system disclosed is expressly not limited to use of packaging soil samples alone for chemical analysis of properties of interest.

### BRIEF DESCRIPTION OF THE DRAWINGS

The present disclosure will become more fully understood from the detailed description and the accompanying drawings, wherein like elements are labeled similarly and in which:
FIG. 1 is a high-level process flow chart providing a summary overview of the agricultural sample packaging process according to the present disclosure;
FIG. 2 is a schematic system diagram of a programmable processor-based control system for controlling the systems and apparatuses disclosed herein associated with the agricultural sample packaging system;
FIG. 3 is left top front perspective view of a sample packaging system embodied in a the sample packaging apparatus of the system;
FIG. 4 is right top front perspective view of a sample packaging system embodied in a the sample packaging apparatus of the system;
FIG. 5 is a right bottom perspective view thereof;
FIG. 6 is a left top rear perspective thereof;
FIG. 7 is a left bottom rear perspective view thereof;
FIG. 8 is a front view thereof;
FIG. 9 is right side view thereof;
FIG. 10 is a left side view thereof;
FIG. 11 is rear view thereof;
FIG. 12 is a top view thereof;
FIG. 13 is a bottom view thereof;
FIG. 14 is a side cross sectional view taken from FIG. 8 through the grinder of the apparatus;
FIG. 15 is a front cross-sectional view taken from FIG. 12;
FIG. 16 is an enlarged view of the grinder taken from FIG. 15;
FIG. 17 is an enlarged view of the compactor taken from FIG. 15;
FIG. 18 is right side cross-sectional perspective view of the apparatus showing the loading funnel of the compactor in a first inward pivotable position;
FIG. 19 is a right side cross-sectional perspective view thereof showing the loading funnel of the compactor in a second outward pivotable position;
FIG. 20 is a right rear perspective view of the apparatus;
FIG. 21 is an enlarged view taken from FIG. 20;
FIG. 22 is a front cross-sectional perspective view taken through the grinder;
FIG. 23 is a front cross-sectional view of the apparatus;
FIG. 24 is a top perspective view of the baseplate of the apparatus showing the rotary sample container carousel and various other devices;
FIG. 25 is a top view thereof;
FIG. 26 is a first perspective view of the hinged funnel of the compactor;
FIG. 27 is a second perspective view thereof;
FIG. 28 is a top cross-sectional perspective view of apparatus showing the sample container decapper;
FIG. 29 is a bottom cross-sectional perspective view thereof showing the top end cap of a sample container engaged by the decapper;
FIG. 30 is a top cross-sectional perspective view thereof;
FIG. 31 is an exploded perspective view of the sample container;
FIG. 32 is perspective view of an alternative rotary type sample container magazine comprising multiple magazine tubes each holding a plurality of sample containers; and
FIG. 33 is a front perspective view of an alternative arrangement of the apparatus showing the grinder vertically located above the loading funnel of the compactor for direct discharge of ground sample material into the compactor.
FIG. 34 is a side cross sectional view of a sample container with a sensor;
FIG. 35 is a side cross sectional view of a sample container with a sensor;
FIG. 36 is a side cross sectional view of a sample container with a sensor;
FIG. 37 is a side cross sectional view of a sample container with a sensor;
FIG. 38 is a right front perspective view of a sample packaging system embodied in an alternative sample packaging apparatus of the system;
FIG. 39 is a front elevation view of the sample packaging system of FIG. 38;
FIG. 40 is a rear elevation view of the sample packaging system of FIG. 38;
FIG. 41 is a bottom left perspective view of the sample packaging system of FIG. 38 with parts removed for viewing;
FIG. 42 is a top right perspective view of the sample packaging system of FIG. 38 with parts removed for viewing;
FIG. 43 is a left rear perspective view of the container magazine in the sample packaging system of FIG. 38;
FIG. 44 is a right rear perspective view of the container magazine in the sample packaging system of FIG. 38;
FIG. 45 is a rear elevation view of the container magazine of FIG. 43;
FIG. 46 is a left side elevation view along a section of the container magazine of FIG. 43;
FIG. 47 is a top plan view of the container magazine of FIG. 43;
FIG. 48 is a left side view of the alternative sample packaging apparatus of the sample packaging system of FIG. 38;
FIG. 49 is a right side view thereof;
FIG. 50 is a first cross sectional side view thereof taken from FIG. 39;
FIG. 51 is a second cross sectional side view thereof taken from FIG. 39;
FIG. 52 is a cross sectional perspective view thereof taken from FIG. 39;
FIG. 53 is an enlarged detail taken from FIG. 52;
FIG. 54 is a first side cross-sectional perspective view taken through the sample grinder and showing a closed inward dumping position of the grinder cover;
FIG. 55 is a second side cross-sectional perspective view taken through the sample grinder and showing an open outward loading position of the grinder cover;
FIG. 56 is a third side cross-sectional perspective view taken through the sample grinder and showing an intermediate grinder actuation position of the grinder cover;
FIG. 57 is an enlarged detail taken from FIG. 56;
FIG. 58 is as top cross-sectional view taken transversely through the sample packaging apparatus of the sample packaging system of FIG. 38 showing details of the sample container carousel mechanism; and
FIG. 59 is a top cross-sectional perspective view thereof; and
FIG. 60 is a perspective view of the sample packaging apparatus of the sample packaging system of FIG. 38 showing an additional secondary sample container magazine mounted on the apparatus cabinet.

All drawings are not necessarily to scale. Components numbered and appearing in one figure but appearing un-numbered in other figures are the same components unless expressly noted otherwise. Any reference herein to a whole figure number which appears in multiple figures bearing the same whole number but with different alphabetical suffixes shall be construed as a general reference to all of those figures unless expressly noted otherwise.

### DETAILED DESCRIPTION

The features and benefits of the present disclosure are illustrated and described herein by reference to exemplary ("example") embodiments. This description of exemplary embodiments is intended to be read in connection with the accompanying drawings, which are to be considered part of the entire written description. Accordingly, the disclosure expressly should not be limited to such exemplary embodiments illustrating some possible non-limiting combination of features that may exist alone or in other combinations of features.

In the description of embodiments disclosed herein, any reference to direction or orientation is merely intended for convenience of description and is not intended in any way to limit the scope of the present disclosure. Relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

As used throughout, any ranges disclosed herein are used as shorthand for describing each and every value that is within the range. Any value within the range can be selected as the terminus of the range. In the event of a conflict in a definition in the present disclosure and that of a cited reference, the present disclosure controls.

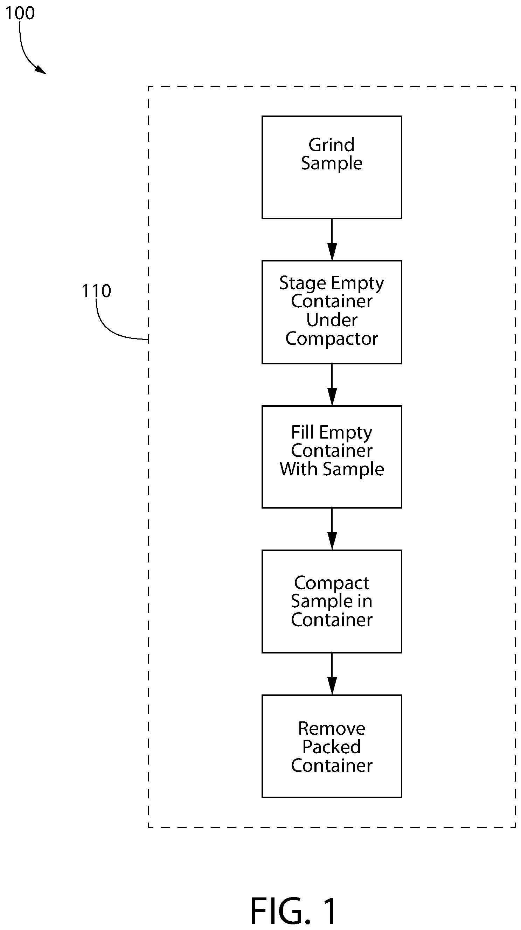

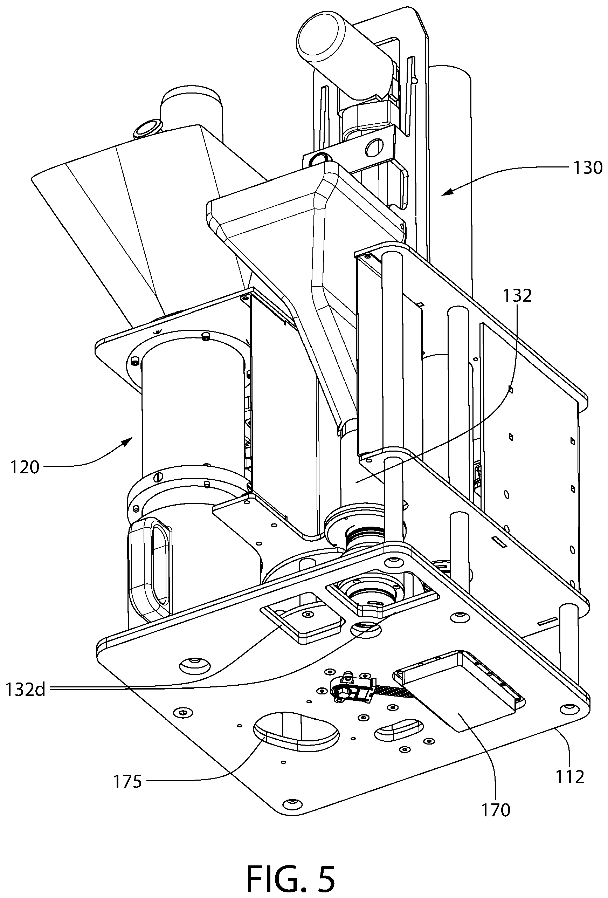

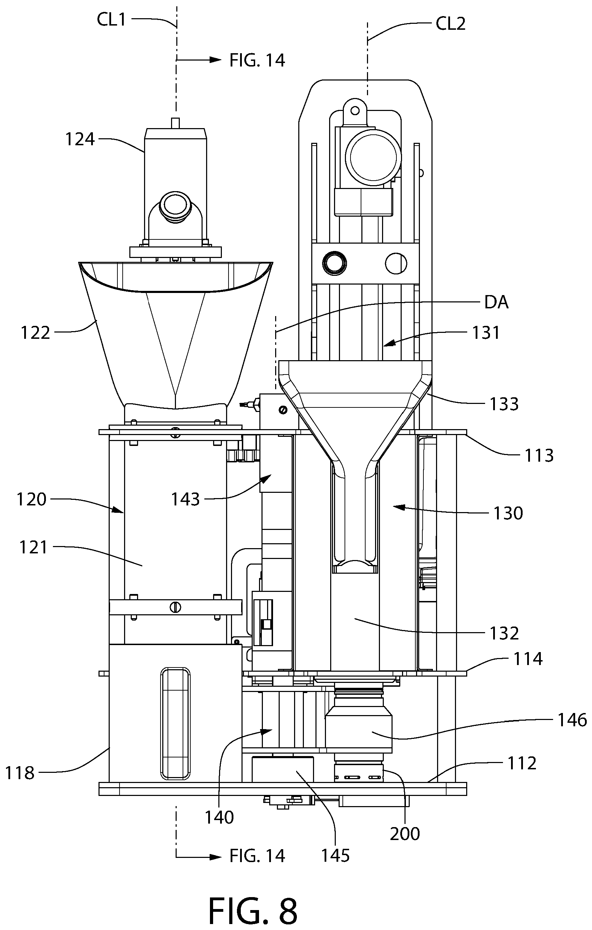

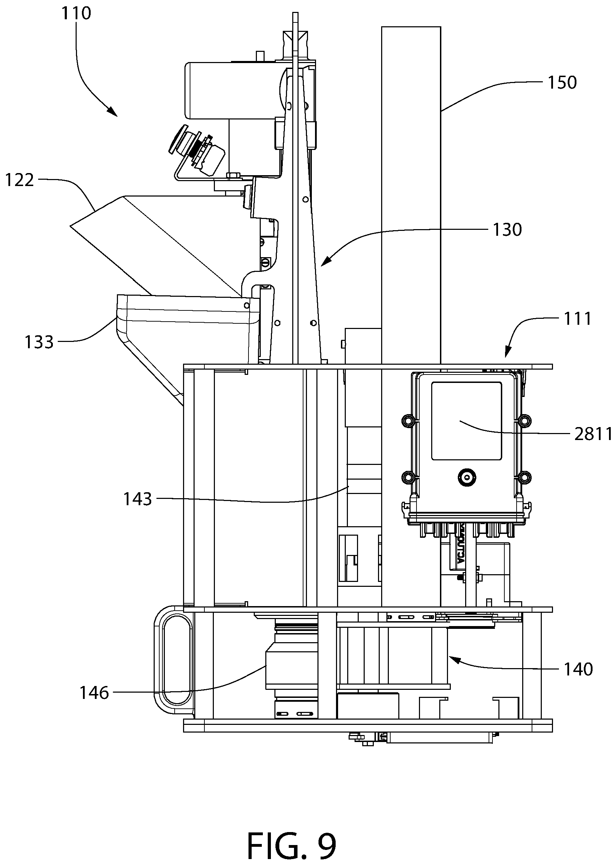

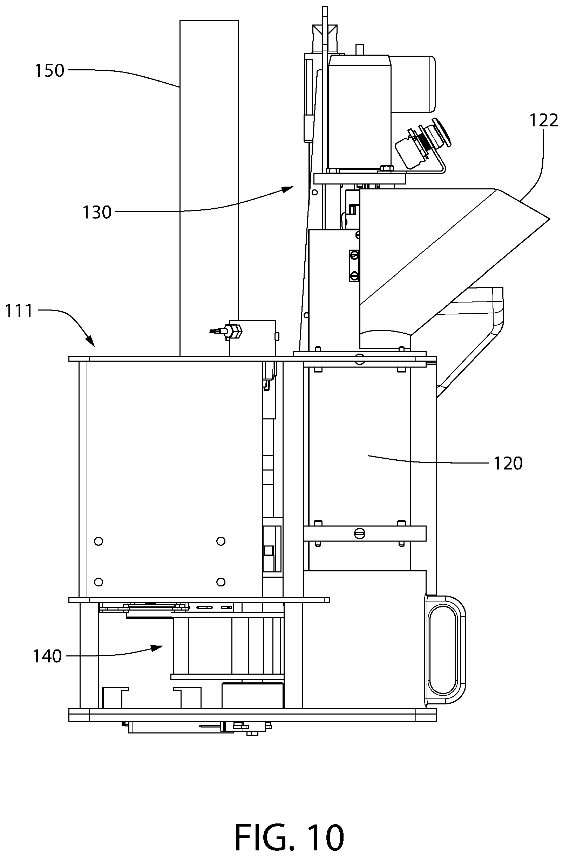

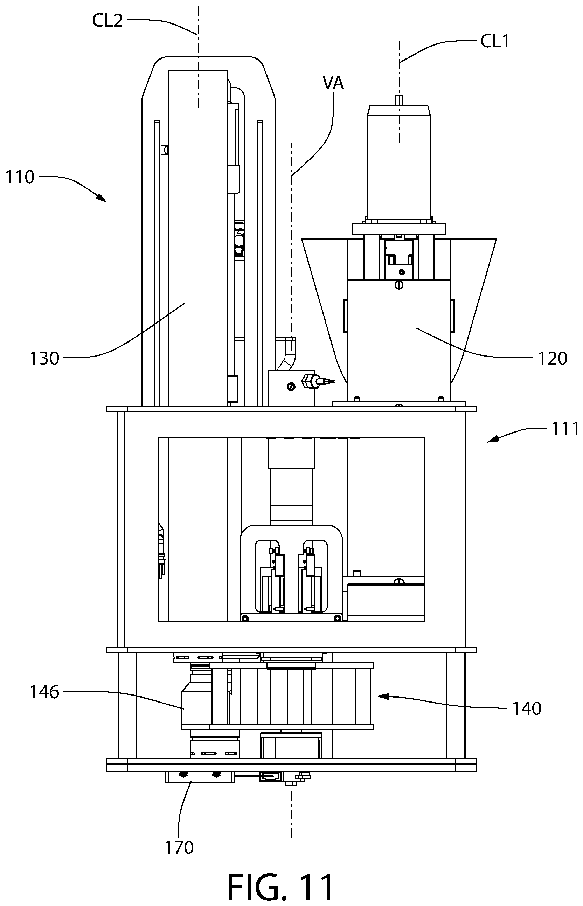

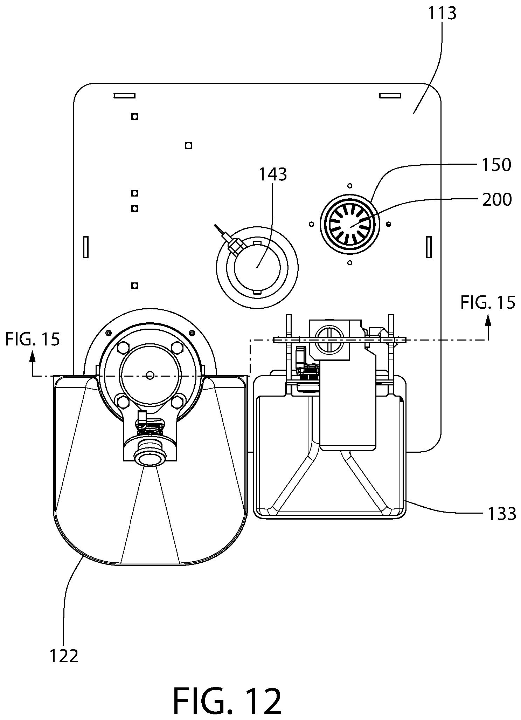

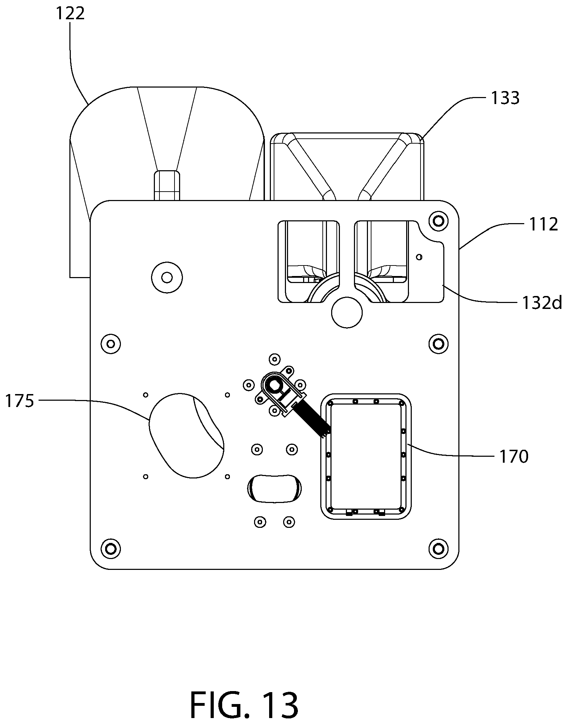

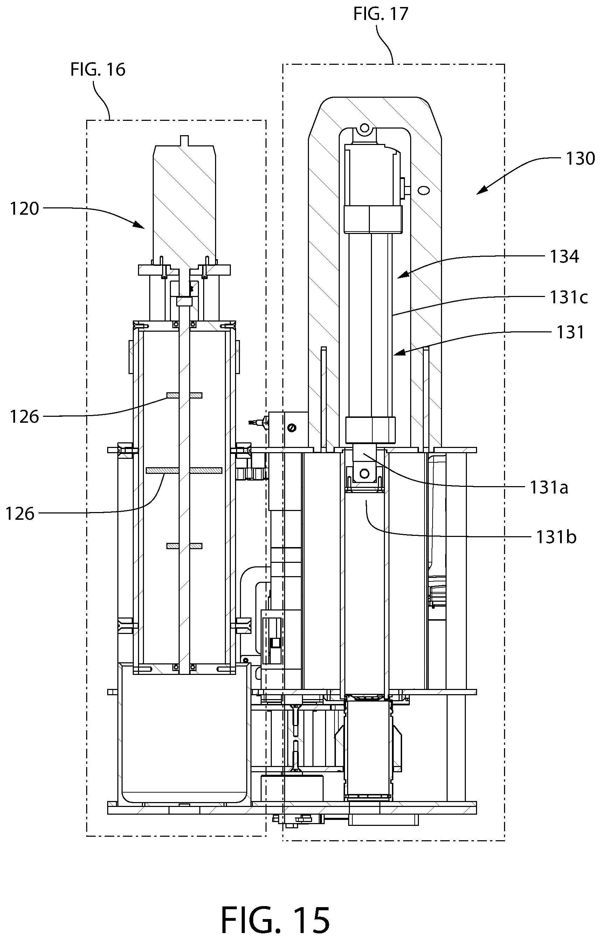

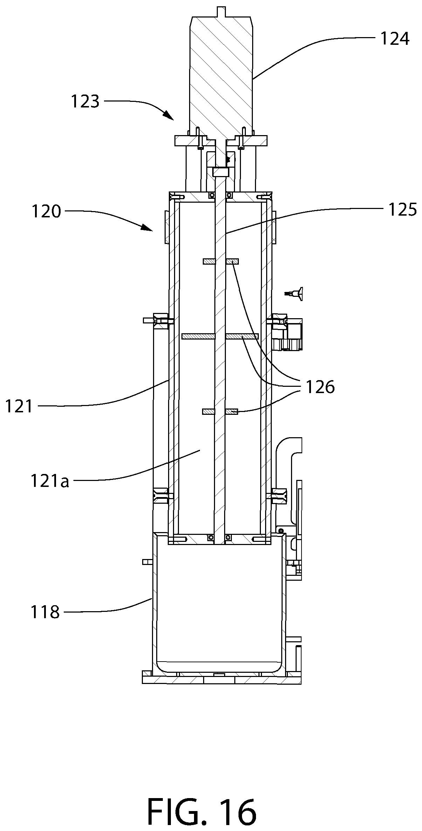

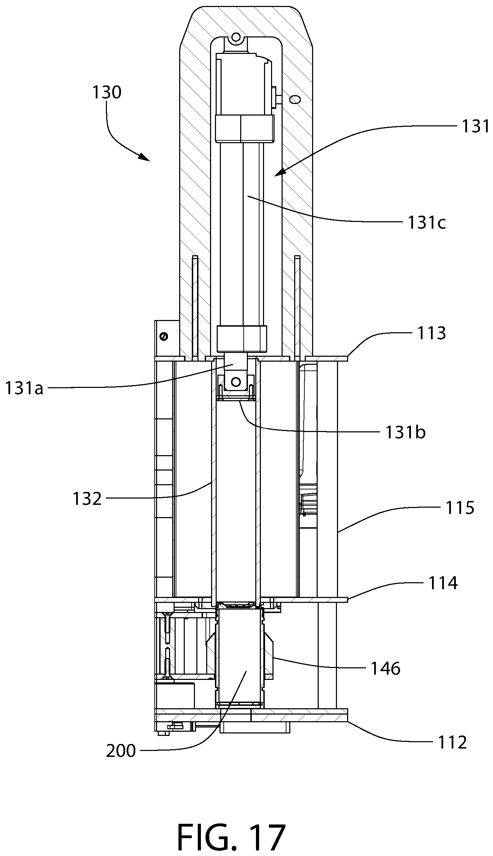

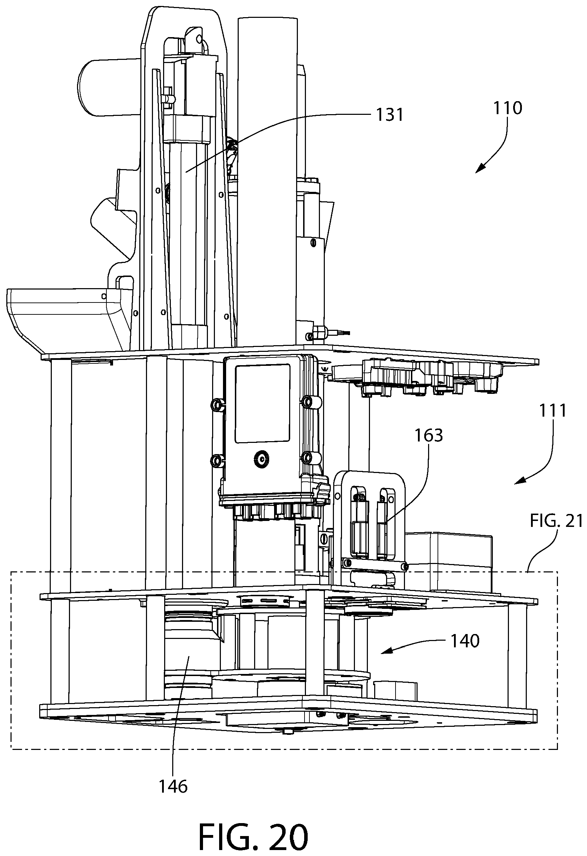

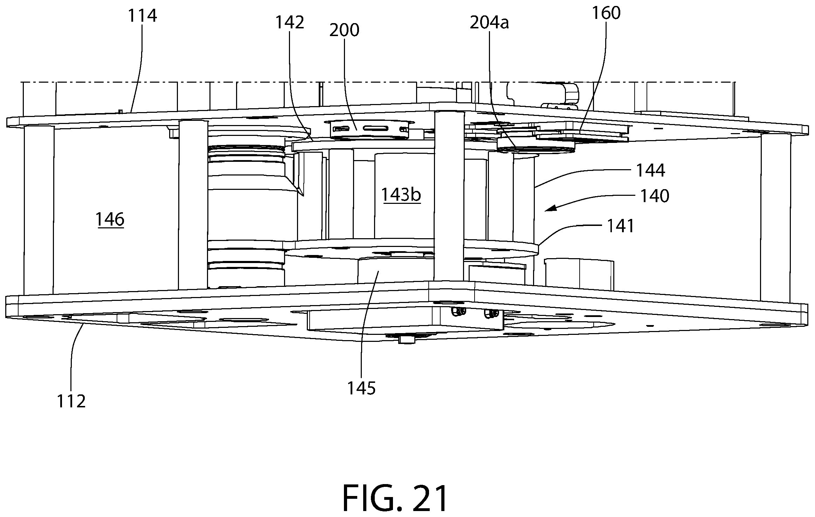

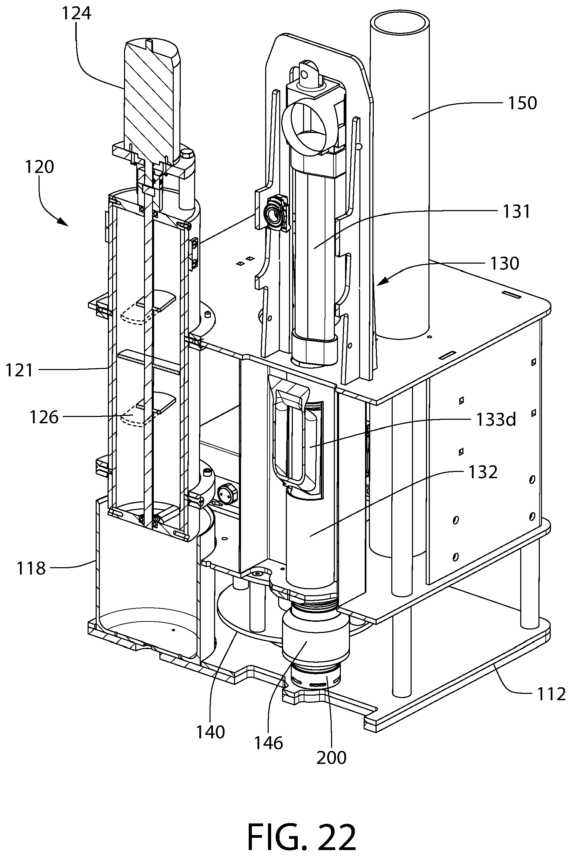

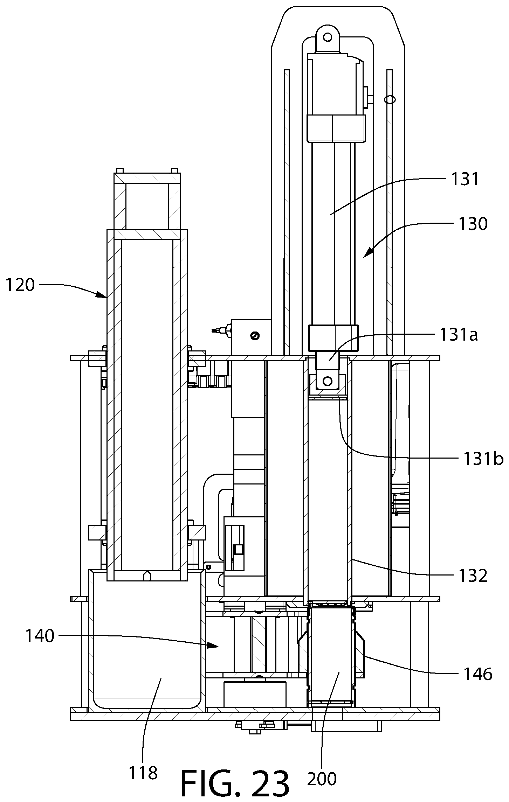

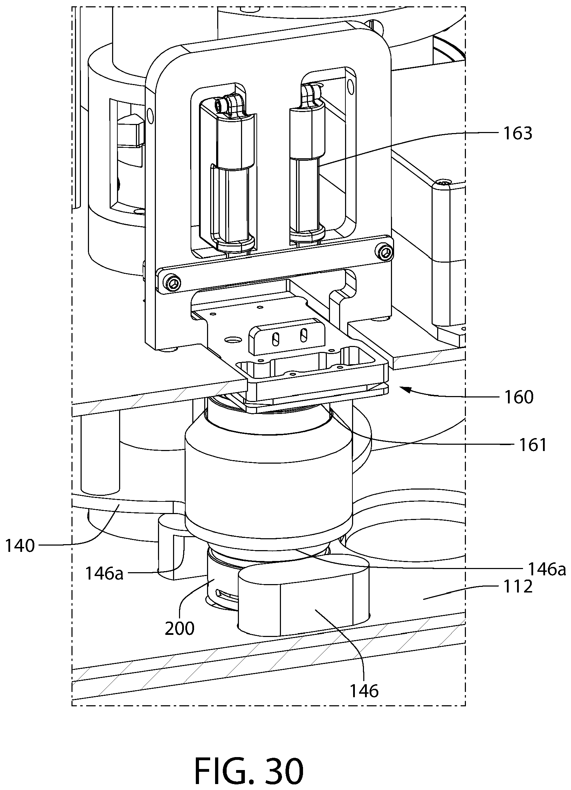

FIGS. 1-31 show one non-limiting embodiment of an agricultural sample packaging system 100 and various components thereof according to the present disclosure. The packaging system may be used for and will be described for convenience of reference with containerizing soil samples as an exemplary illustrative but not limiting use.

Sample packaging system 100 generally comprises agricultural sample packaging apparatus 110 which functions primary to grind the bulk agricultural material sample (e.g., soil in the present embodiment or other) sample and containerize/package the ground sample in the sample tube or container 200 in a compacted state. Apparatus 110 can be both horizontally and laterally elongated in structure and defines a vertical axis VA for reference which extends through and intersects the geometric centerline of the apparatus.

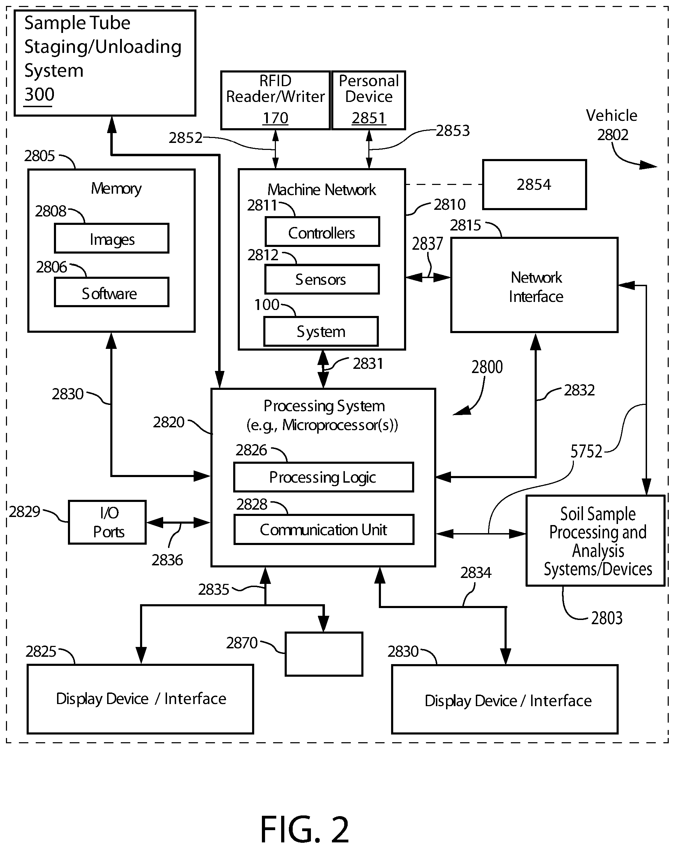

Sample packaging apparatus 110 includes a structural support frame 111 configured to support the components of the apparatus. Frame 111 provides a common frame or mounting platform for the sample grinder, compactor, carousel, and sample container magazine further described herein which allows the apparatus to be transported as a single unit for processing agricultural sample material. The frame 111 may be configured for mounting on a stationary support surface or to a roving vehicle of any type (see, e.g., FIG. 2 schematic representation) which travels across the agricultural field to collect soil samples from different sampling locations which are containerized or packaged by apparatus 110. When mounted to a vehicle, the apparatus may be mounted in a cantilevered manner to the vehicle to return excess soil sample material directly back to the agricultural field in some embodiments. Each sample is associated with a unique GPS (global positioning system) coordinate where collected, which may be tracked via an RFID tracking system, as further described herein.

Frame 111 may have any suitable configuration to fixedly and/or movably support the various components of packaging apparatus 110 as required depending on the nature of the individual components. In one non-limiting embodiment, as illustrated, support frame 111 may be a multi-level or tiered structure comprising a laterally broadened horizontal baseplate 112, upper platform 113, and optionally intermediate platform 114 spaced vertically therebetween. The baseplate and platforms may comprise substantially flat and broad plates in structure which may be oriented substantially parallel to each other as shown. Baseplate 112 and platforms 113, 114 may be formed of metallic plates in some constructions; however, other materials such as plastics may be used instead of or in combination with metallic materials. The choice of materials does no limit the invention.

The support frame 111 may further include laterally spaced apart vertical spacers or supports 112a of any suitable configuration as needed which support the upper and intermediate platforms from the baseplate 112 and space them apart as shown. One or more side plates 115 and various brackets 116 may optionally be provided to provide additional structure for mounting the various components to the frame including auxiliary devices associated with the soil sample packaging apparatus 110. Frame 111 may be an assemblage of rigidly fastened and/or welded variously shaped and plural structural members (e.g., plates, tubes, rods, L-angles, I-beams, C-beams, etc.) configured to support the components of the apparatus 110 and mount the apparatus on or to a support surface or object. The support surface or object may be a stationary article or structure (e.g.,. floor, table, platform, etc.), or movable such as part of a self-powered or pulled wheeled vehicle as previously noted (e.g., ATV, Gator^{™} Utility vehicle, truck, trailer, etc.). Accordingly, numerous configurations of frames are possible depending on the mounting needs.

Support frame 111 provides a mounting structure for the functional and movable or stationary electronic and non-electronic components of the packaging apparatus 110. In one embodiment, the major components of the apparatus supported by the frame generally comprises a bulk sample material grinder 120, a sample compactor 130, a sample container magazine 150, and a rotatable sample container carousel 140 configured to removably receive, hold, and move a sample canister or container 200 through various positions for the soil sample packaging operation. Grinder 120 defines a sample grinding station and compactor 130 defines a packaging station of the sample packaging apparatus 110.

Sample material grinder 120 and compactor 130 may be vertically elongated and oriented devices in one non-limiting embodiment to perform their respective functions for processing the soil sample material in a vertical flow manner advantageously assisted by gravity. Grinder 120 defines a vertical centerline CL1 which may be parallel to vertical centerline CL2 of the compactor 130. The grinder and compactor may be located and mounted side-by-side on support frame 111 as shown in one mounting arrangement. Grinder 120 may therefore be mounted adjacent to compactor 130 on frame 111. Other arrangements of these components may be used. In addition, in some embodiments, the grinder may be mounted on its own separate frame (not shown) discrete from the present apparatus support frame 111 which may include primarily the carousel 140, container magazine 150, and compactor 130. In such arrangements, it is possible that the grinder may even be located at a location remote from the compactor.

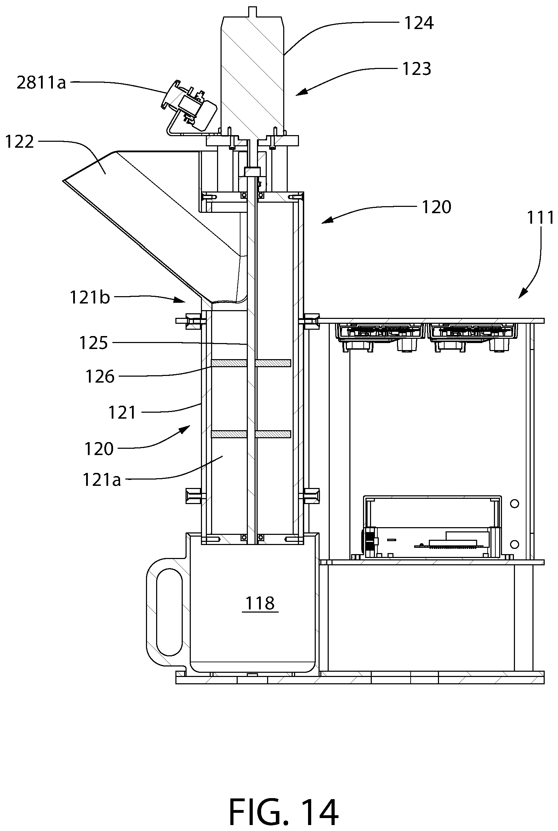

Sample material grinder 120 includes a hollow tubular and cylindrical housing 121 defining an internal grinding chamber 121a which receives the bulk soil sample material, loading funnel 122 coupled to the top of the housing, and grinder drive mechanism 123. The grinder housing 121 and its chamber thus may therefore be circular in transverse cross section shape. Other shaped housings and chambers may be used. The housing 121 includes a front loading port 121b (see, e.g., FIG. 14) which places the chamber 121a in communication with the grinder funnel 122 for transferring the bulk soil sample material into the grinder. The front loading port allows drive mechanism 123 to be mounted above and on top of the grinder housing as shown. Housing 121, funnel 122, and drive mechanism 123 may be primarily mounted to and supported by the upper platform 112 in one embodiment as depicted. The grinder housing may thus be mounted to and supported by the upper platform 112 in a vertically suspended manner.

Grinder drive mechanism 123 in one embodiment includes electric motor 124 rotating a drive shaft 125 coupled thereto. Any suitable commercially-available constant or variable speed motor may be used. Shaft 125 includes at least one grinding blade 126 supported in chamber 121a within the housing. Some embodiments includes sets of blades 126 spaced vertically apart on the shaft. Grinding blade 126 is configured and operable to grind and break down the larger bulk soil sample material in the "as collected" state from agricultural field into smaller size particles for loading into the sample containers 200 and further processing. Grinding blades 126 can be sized relative to housing 121 such that the grinder is a flow through grinder. Grinding blades 126 can be sized to minimize thickness but still be able to process samples. In one embodiment, the thickness of grinding blades is not greater than 1.27 cm (0.5 in). The motor and drive shaft may be vertically oriented as shown and coaxially aligned with vertical centerline CL1 of the grinder 120 which passes through the geometric center of the cylindrical grinder housing 121.

Funnel 122 may be partially frustoconically shaped having a larger open top end for receiving the bulk soil sample which converges to a narrower open bottom end for introducing the sample material into grinding chamber 121a via the front loading port 121b of the grinder housing 121. The bottom end of the funnel mates against the front loading portion of the grinder housing in one embodiment to laterally deposit the bulk sample material into the grinding chamber 121a.

The grinder funnel 122 comprises a plurality of angled and sloping walls 122a for guiding the sample material into grinding chamber 121a. The bottom end of the grinder housing 121 is at least partially open for loading ground soil sample material into a transfer container or vessel 118. Vessel 118 is positioned directly beneath the bottom end of grinder housing 121 and may be seated on the baseplate 112 of support frame 111. The bottom end of grinder housing 121 is spaced vertically apart from and above the baseplate 112 to provide room for inserting and removing the transfer vessel 118 from beneath the grinder. The transfer vessel may include a handle 118a for manually transferring the ground soil sample to the compactor 130 for compaction and containerizing/packaging into the sample container 200, as further described herein. Any suitably shaped transfer vessel may be provided including a cylindrical cup with an open top and closed bottom as shown. Vessel 118 and/or grinder funnel 122 can be sized to have a volume corresponding to the volume of sample container 200 to ensure there is enough or not too much soil for sample container 200.

In another embodiment, instead of being a pass through grinder, grinder 120 can be lowered into transfer vessel 118 to grind the sample in transfer vessel 118.

While grinder funnel 122 and loading funnel 133 are illustrated with a manual feed, grinder funnel 122 and/or loading funnel can be combined with any of the automated collection systems described in the applications listed at the end of this specification.

Compactor 130 generally includes a piston-actuated plunger 131, hollow tubular and cylindrical compactor feed tube 132 configured to slideably receive the plunger therein in reciprocating upward/downward strokes, and loading funnel 133 movably coupled to the support frame 111 adjacent the feed tube. The vertically elongated feed tube 132 defines an internal cavity 132a configured to receive the ground soil sample material from loading funnel 133, and thus may therefore be circular in transverse cross section shape. Other shaped feed tubes and cavities may be used.

The compactor feed tube 132 includes a front loading port 132b which places its internal cavity 132a in communication with the compactor loading funnel 132 for transferring the loose ground soil sample material from grinder 120 into the compactor. The front loading port allows piston drive mechanism 134 to be mounted above the feed tube on the packaging apparatus support frame 111. The piston drive mechanism 134 and funnel 133 may be primarily mounted to and supported by the upper platform 112 via dedicated brackets 116 of the support frame.

Piston drive mechanism 134 which actuates plunger 131 in some embodiments may be any suitable linearly acting actuator mechanism which may be an electrically, pneumatically or hydraulically actuated piston rod mechanism. Accordingly, drive mechanism 134 may be any suitable commercially-available electric, pneumatically, or linear rod type actuator comprising a cylinder 131c, retractable/extendible plunger rod 131a, and cylindrical head 131b affixed thereto which collectively define the sample-compaction plunger 131. During operation, the operation of drive mechanism 134 can be stopped when a condition occurs. Conditions include, but are not limited to, drive mechanism 134 reaching maximum current (which can be measured by a current sensor), drive mechanism 134 reaches full extension, the speed of drive mechanism 134 slows below a target value or approaches zero, or a load cell on cylindrical head 131b rises above a target value.

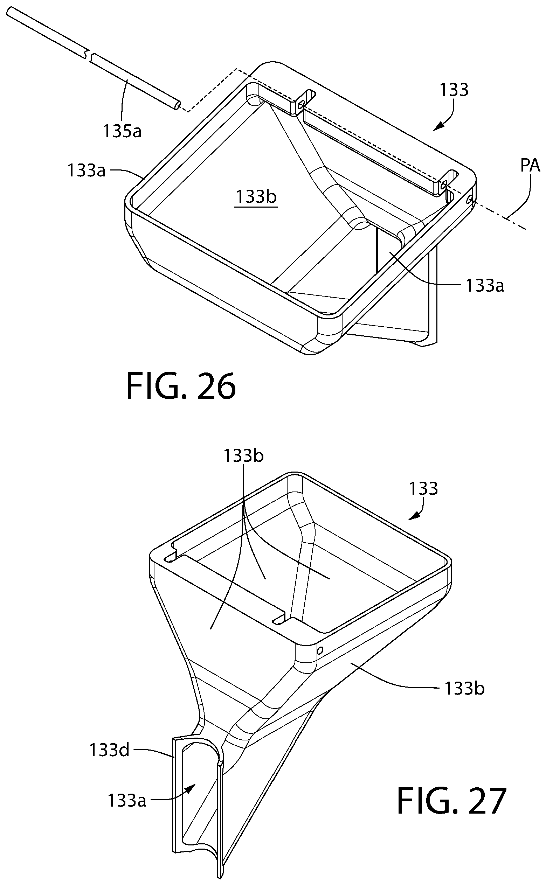

Loading funnel 133 of compactor 130 may be partially frustoconically shaped having a larger open top end 133c for receiving the bulk soil sample which converges to a narrower bottom end in one embodiment. FIGS. 26-27 show the funnel in isolation. The funnel 133 may have any suitable configuration and comprises a plurality of intersecting angled and sloping walls 133b. The lower portion of funnel 133 comprises a sloping bottom wall 133b terminating in a laterally and inwardly open discharge window 133a for introducing the ground soil sample material into the compactor feed tube 132 via the forward-facing vertical front loading port 132b of the tube. Window 133a is vertically oriented to discharge the ground soil sample material laterally (in a direction transverse to centerline CL2 of compactor 130) into the feed tube 132 of the compactor. The lower portion of funnel 133 containing discharge window 133a mates with the front loading port 132b of the feed tube to place the funnel in communication with the tube cavity 132a of the feed tube in one embodiment. In one embodiment, funnel 133 includes a protruding semi-circular sealing collar 133d which surrounds the discharge window 133a and is complementary configured to mate with the radius of curvature of the feed tube 132. This forms a seal around the front loading port 132b of the tube to minimize loss of the soil sample until the tube is filled with soil. Collar 133d may have a partial tubular shape as shown to conform to the radius of curvature of the feed tube 132.

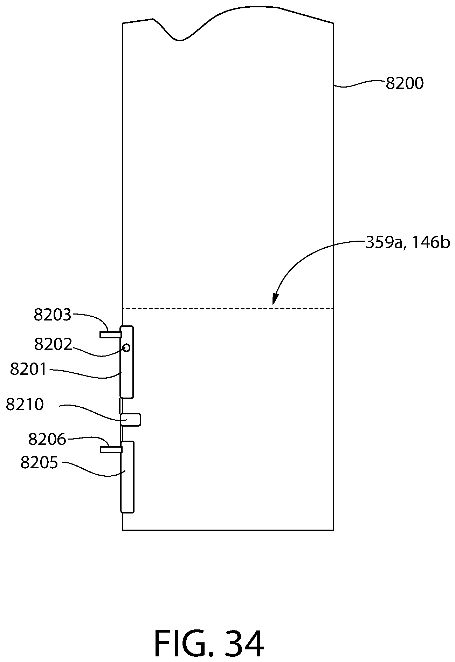

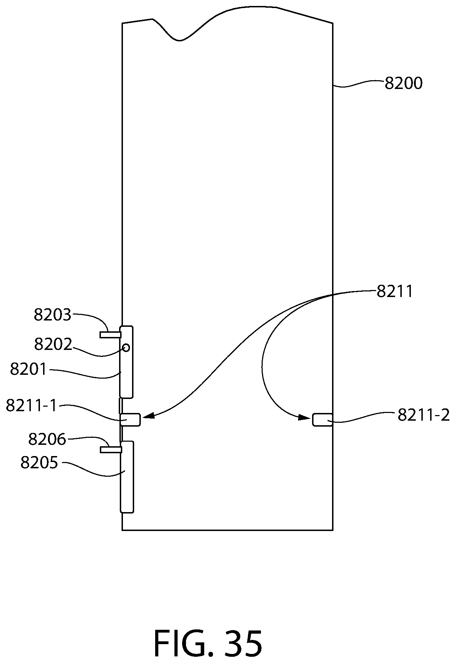

In any of the embodiments, sample container 200 can be a smart sample container that contains a controller configured for collecting and/or relaying information about the agricultural sample inside the container. A nonlimiting example of a smart container is sample container 8200 shown schematically in FIGS. 34-37.

As illustrated in FIGS. 34-35, sample container 8200 in one embodiment includes at least one of sensors 8210 and 8211 for measuring sample properties of agricultural sample materials held in the sample container. The sensors may measure different properties of the sample material. Sample container 8200 can have the same general features and structure as sample container 200 in one embodiment, or sample container 8200 can have some different structure and features. For ease of illustration, a portion of sample container 8200 is schematically illustrated in FIGS. 34-37 using sample container 200 as the model. Sample container 8200 may have a cylindrical body in some embodiments similar to container 200.

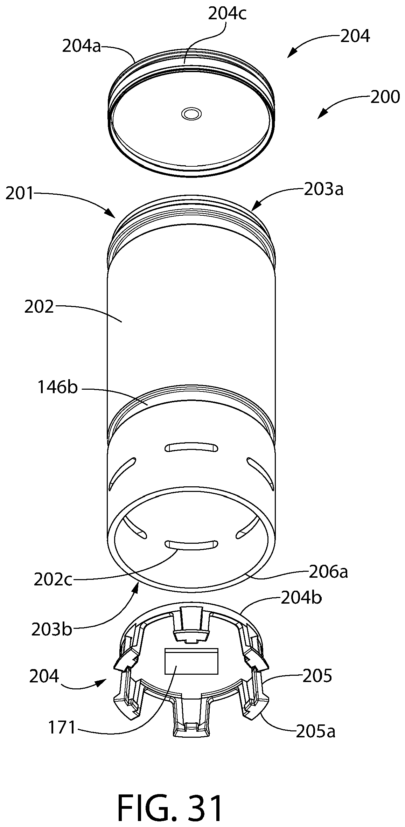

Disposed on the inside or the outside of the elongated hollow body of sample container 8200, there is a programmable controller 8201 that is in operable and signal communication with sensor 8210 and/or sensor 8211. The onboard container controller 8201 may be operably and communicably linked to one or more external electronic devices not onboard the container such as without limitation main system controller 2820 previously described herein (see, e.g., FIG. 2) for relaying information collected by the associated sensors described here (e.g., data related to properties of the sample material) to the main system controller, and/or receiving instructions from controller 2820 which may control and direct operation of controller 8201 and sensor data collection. As illustrated, controller 8201 may be disposed inside sample container 8200 in the interior on the cylindrical wall of the container body 202 in one embodiment (see also FIG. 31). In other embodiments, controller 8201 may be disposed on the exterior of the container, or partially or fully embedded in the wall of the container. Controller 8201 may have either or both a wired signal port 8203 or wireless port 8202 for communicating data collected from sensor 8210 or sensor 8211 to one or more external electronic devices. Controller 8201 is in signal communication with any other controller, such as main system controller 2820. Controller 8201 may therefore be operably and communicably linked to system controller 2820 (see, e.g., FIG. 2) and/or other external electronic devices via the communication ports 8202 and 8203. In some embodiments, the main system controller 2820 may be in operable communication with a plurality of smart sample containers simultaneously being processed in the agricultural sample packaging systems described herein for receiving sample property data and/or transmitting instructions to the controllers onboard the containers.

Sample container 8200 in one embodiment may include an onboard electrical power supply to power controller 8201 and the array of container sensors. In one embodiment, the power supply may be at least one disposable or rechargeable battery 8205 which is in electrical communication with controller 8201, sensor 8210, sensor 8211, an other container sensors provided for supply power thereto. Port 8206 on battery 8205 allows for recharging the battery. Since controller 8201 and battery 8205 are illustrated as being disposed inside of sample container 8200, ports 8203 and 8206 extend or are accessible through the tubular wall of the container body 202.

Sensor 8210 can be a temperature sensor in one embodiment configured to measure temperature of the sample material, a moisture sensor configured to measure moisture content of the sample material, or any other type of sensor to measure other properties and characteristics of interest of the sample.

Sensor 8211 can be an electrical conductivity sensor in one embodiment comprising a pair of electrodes 8211-1, 8211-2 operable to measure electrical conductivity through the sample material across the electrodes. First electrode 8211-1 and the second electrode 8211-2 are spaced apart and mounted in the interior of the tubular body 202 (i.e. on the wall) of the sample container 8200 and in contact with the sample material. The first and second electrodes may mounted on diametrically opposite sides of the tubular body of sample container. The first and second electrodes when energized are operable to generate a current through the sample material therebetween to measure the electrical conductivity of the material. Sensor 8211 is operable to relay/transmit the measured conductivity to the container controller 8201.

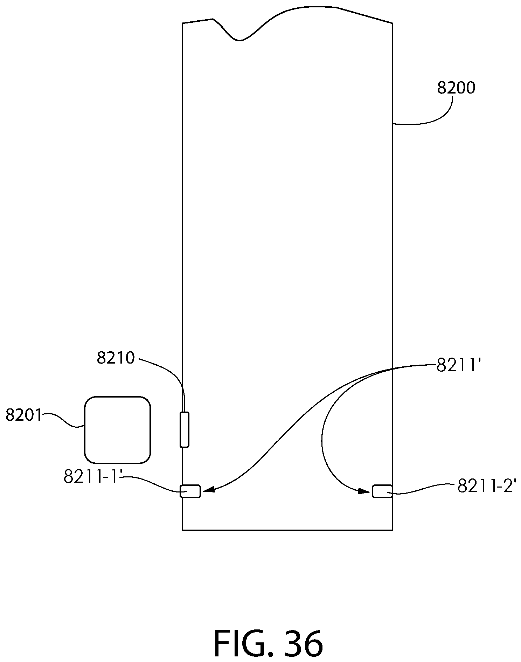

Alternatively, battery 8205 is not needed for sensor 8210 or sensor 8211. As illustrated in FIG. 36, sensor 8210' or sensor 8211' (8211-1', 8211-2') can receive both wireless signals (e.g., control signals) and also wireless power (inductive charge) from controller 8201'. Controller 8201' may be in signal communication with any other controller, such as system controller 2820 (see, e.g., FIG. 2).

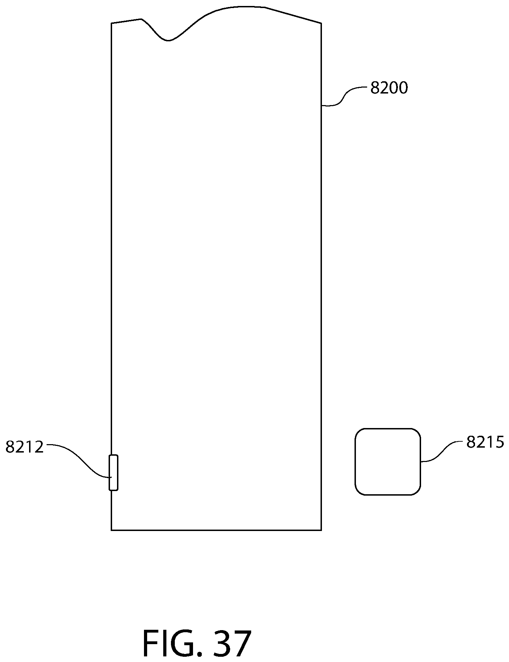

In another embodiment illustrated in FIG. 37, smart sample container 8200 has a Radio Frequency Identification (RFID) tag 8212 mounted inside or outside of container 8200, or embedded partially or fully in the wall of the container body 202. When container 8200 is placed next to or passes by an RFID reader 8215, the minimum response threshold or the received signal strength is measured for the signal passing through the sample. The radio signal may be transmitted by the RFID reader to the container controller 2801 and/or main system controller 2820 in some embodiments. The travel time of the signal is directionally related to the moisture of the sample. Controllers 2801 and/or 2820 may be programmed to correlate the travel time of the signal to a moisture content. Examples of RFID systems are described in US Patent Publication No. US20210286961A1 and European Patent Publication No. EP2808840A1.

In some embodiments, as further described elsewhere herein, the RFID tag may also be used by the RFID reader and main system controller 2820 to track the real-time location of each of the smart sample containers 8200 being processed through the agricultural sample packaging apparatus 110 or 310 by incorporating a unique identifier with each sample container, which can further be associated with a GPS (global positioning system) location for identifying where in the agricultural field the sample was collected. Accordingly, the RFID tag provides multiple functionalities related to the smart sample container and sample contents.

In one embodiment, the location of sensor 8210, 8210', 8211, 8211', controller 8201, and battery 8205 is at an end of the smart sample container 8200 (e.g., bottom) away from plunger 131 to avoid damage to the electronics.

It bears noting that smart sample container 8200 may be used in either agricultural sample packaging apparatus 110 or 310. Accordingly, it will be understood that any reference herein to original sample container 200 may also be construed as a reference to smart sample container 8200 as a substitute.

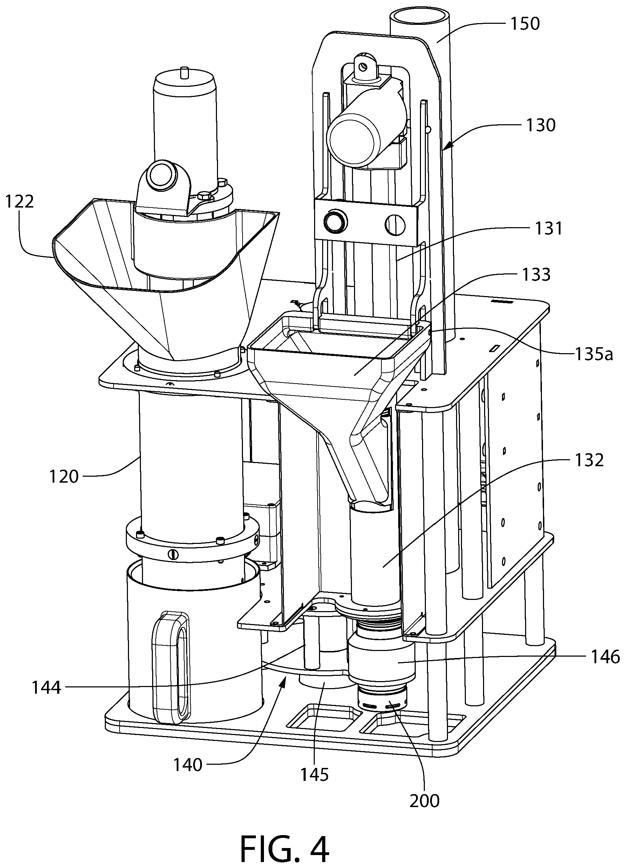

Funnel 133 of compactor 130 may be hingedly coupled to the apparatus support frame 111 by hinge mechanism 135 comprising horizontally oriented hinge pin 135a defining a pivot axis PA (see, e.g., FIGS. 4, 18-19, and 26). The pivot axis is transversely oriented relative to vertical centerline CL2 of the compactor 130 in the illustrated embodiment. Hinge pin 135a pivotably couples the rear top portion of funnel 133 to the support frame 111 of the soil sample packaging apparatus 110 as shown for pivotable movement relative to the compactor feed tube 132.

Loading funnel 133 of compactor 130 is pivotably movable between (1) an inward position in which the rear lower portion of the funnel abuttingly engages the frontal portion of the compactor feed tube 132 circumscribing front loading port 132b of the tube, and (2) an outward position in which the lower portion of the funnel disengages the tube. In the inward position, the funnel discharge window 133a mates with front loading port 132b of the tube for loading the ground soil sample material into the tube. The sealing collar 133d of funnel 133 also abuttingly engages the compactor feed tube when the funnel is in the inward position to form a seal therebetween. In the outward position of funnel 133, the window 133a and tube lower portion are spaced apart from the loading port and tube. In one embodiment, the diameter of compactor feed tube 132 is sized not to be larger than the diameter of sample container 200.

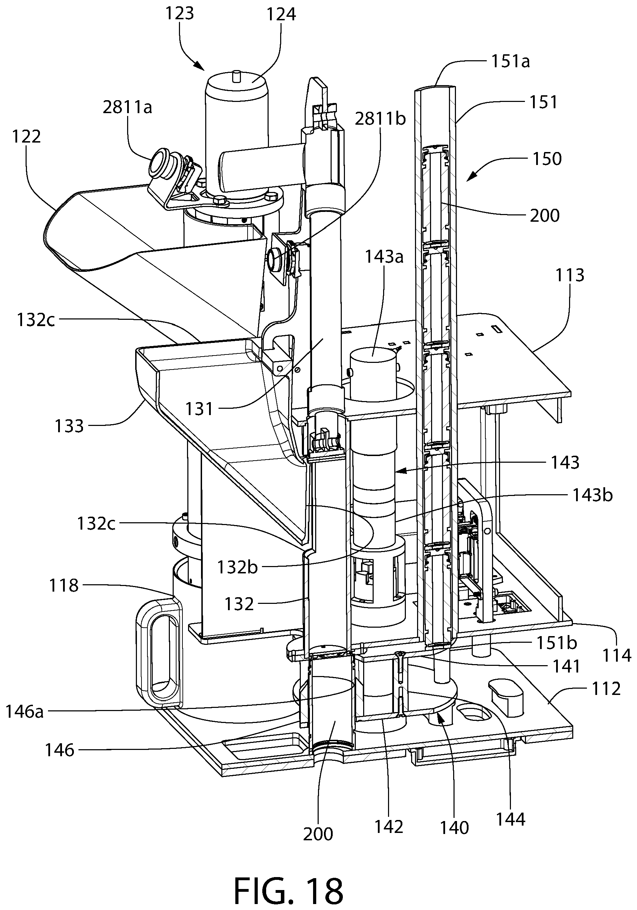

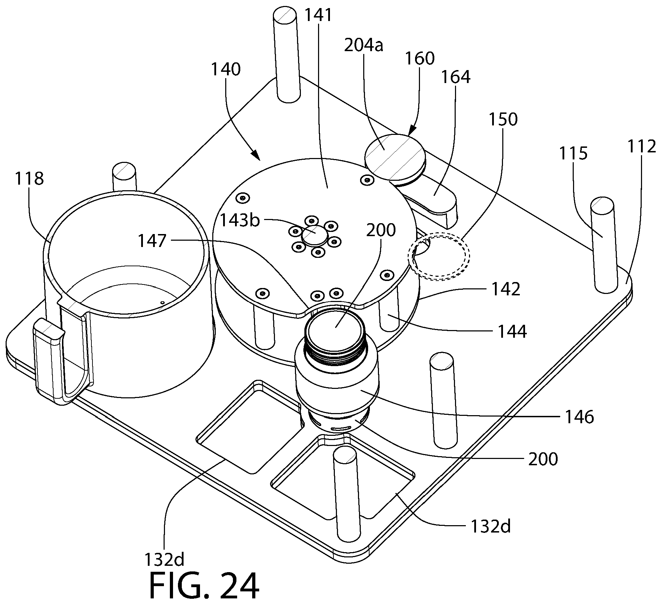

Sample container carousel 140 is rotatably mounted to support frame 111. In one embodiment, as best shown in FIGS. 18 and 24, the carousel 140 generally comprises a rotating disk assembly including upper disk 141 and lower disk 142 spaced vertically apart therefrom, and rotary drive mechanism 143 supported by apparatus frame 111. Lower disk 142 is located proximate to but spaced vertically apart from upper disk 141 by a plurality of spacer rods 144 coupled between the disks. Spacer rods 144 fixedly couple the upper and lower disks 141, 142 together such that the disks rotate in unison. Each disk 141, 142 defines opposing major surfaces and the major surfaces of both disks may all be parallel to each other as shown in one non-limiting embodiment. Lower disk 142 is rotatably supported by a rotary bearing 145 mounted to baseplate 112 of support frame. The disk assembly is mounted proximate to baseplate 112 and between the baseplate and intermediate platform 112. The upper and lower disks are circular in shape and may be formed of a suitable metallic or plastic material.

Carousel 140 includes a sleeve-shaped sample container holder 146 defining an upwardly and downwardly open receptacle 146a configured to removably receive a single sample container 200. The holder 146 has hollow tubular shape in one configuration and transverse cross-sectional area configured to hold only a single sample container in one embodiment. When the container is loaded in the holder, the bottom end of the container is supported by and slideably engages baseplate 112 of support frame 111. The container 200 slides along the baseplate 112 in a circular path of travel when carousel 140 is rotated through various positions during the soil sample packaging operation, as further described herein. The upper portion of the sample container may project upwards out from the top end of container holder 146 as shown. In one embodiment, holder 146 may be fixedly coupled to the lower disk 142 of carousel 140 such as via threaded fasteners or welding as some fixation examples.

In one embodiment, upper disk 141 of carousel 140 may include a semi-circular container feed cutout 147 which may be coaxially aligned with the receptacle 146a of container holder 146. The cutout 147 thus coincides with the location of container holder 146 and remains fixed in this vertical alignment. The container holder 146 is located beneath carousel upper disk 141 and its cutout 147, and may be positioned below the bottom end of compactor feed tube 132 via rotation of carousel 140 for filling container 200, as further described herein.

To load a fresh empty sample container 200 into the container holder of the carousel, the holder 146 and cutout are rotated beneath the bottom end of the tubular hollow body of the vertical container magazine 150. The lowermost container 200 in the magazine slideably engages and is supported by solid peripheral portions of the upper disk 141 on either side of the feed cutout 147 as the carousel is rotated through various positions, as further described herein. When the cutout and receptacle 146a of container holder 146 reach the rotational position of the carousel 140 beneath the lowermost container in the magazine 150, that container automatically drops via gravity downwards into the holder.

Once the container has been loaded in the carousel container holder 146, the carousel 140 may be rotated until the top end of the sample container 200 carried by the carousel is rotated into position beneath and adjacent to the bottom end of the compactor feed tube 132 for loading the ground soil sample material into the container (see, e.g., FIGS. 4, 8, and 18) and compacting the sample therein.

Rotary drive mechanism 143 of carousel 140 may be vertically oriented and elongated. The drive mechanism in one embodiment includes electric motor 143a and drive shaft 143b which may be of any suitable configuration and construction. The motor may be positioned above the carousel disk assembly as shown; however, in other embodiments the motor may be mounted to the underside of baseplate 112 of support frame 111 and driven from below instead of from top. Drive mechanism 143 defines a vertical drive axis DA which is laterally offset but parallel to vertical centerlines CL1 and CL2 of grinder 120 and compactor 130, respectively. In one embodiment, the carousel 140 and drive mechanism 143 may be located in the central region of the apparatus and baseplate 112 (see, e.g., FIGS. 24-25).

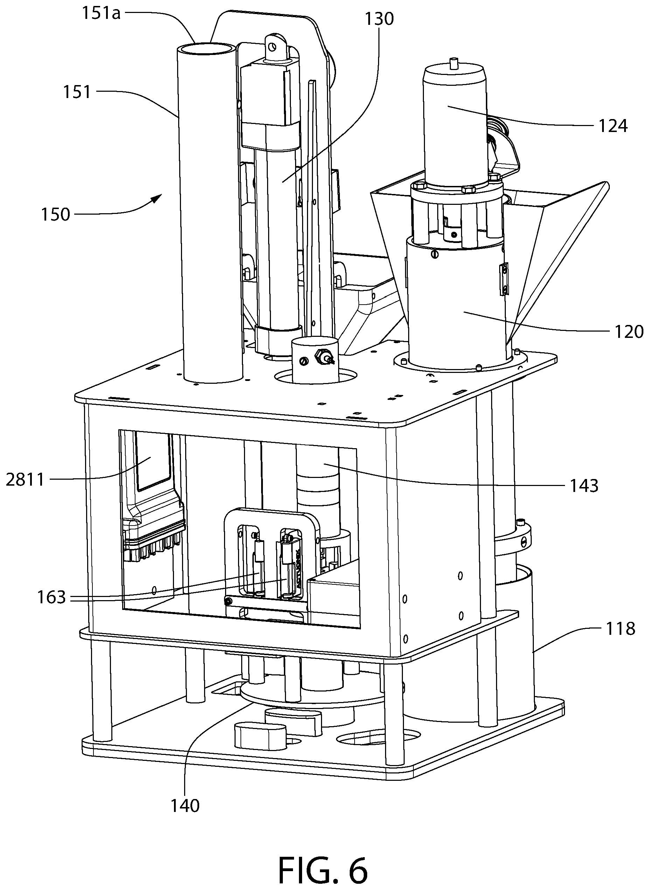

The sample packaging apparatus 110 further comprises a container magazine 150 configured to hold a plurality of empty sample containers 200. In one embodiment, container magazine 150 may comprise a vertically elongated and oriented tubular body or tube 151 including an open top end 151a and open bottom end 151b (see, e.g., FIGS. 6 and 18). The magazine tube is configured to hold the containers 200 in vertically stacked end-to-end relationship for selective dispensing and feeding onto the rotary container carousel 140 in a timed sequence during the packaging operation, as further described herein. The containers 200 are loaded directly into the container holder 146 of carousel 140 from the bottom end 151b of the magazine in a vertically oriented position. The magazine 150 stages the empty containers for filling with compacted ground soil sample material. Empty containers may be manually loaded through the top end 151a into the container magazine, or alternatively may be automatically loaded therein by an automated loading mechanism in other embodiments contemplated. The container magazine 150 is fixedly mounted to support frame 111 (e.g., upper and intermediate platforms 113, 114 in one embodiment as best shown in FIG. 18) above the carousel.

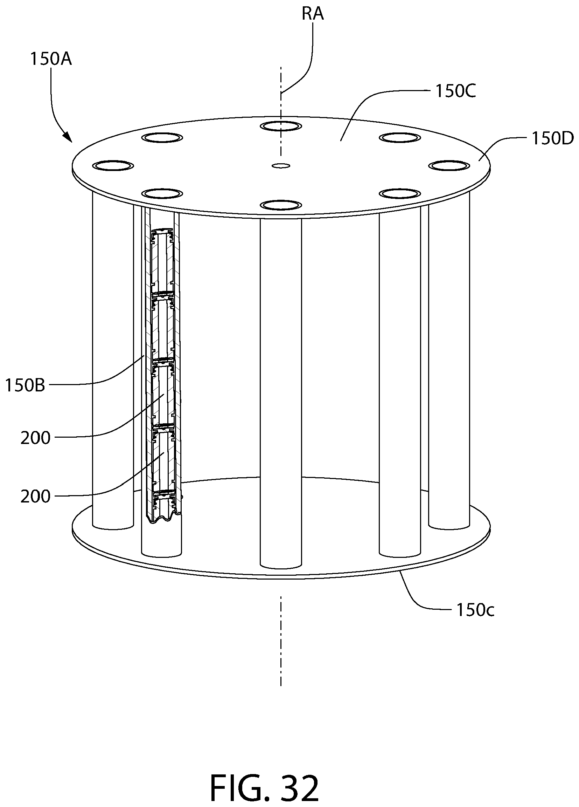

It bears noting that other configurations of container magazines may be provided and is not limiting of the invention. For example, FIG. 32 depicts an alternative embodiment comprising a rotary sample container magazine 150A which comprises a chassis 150D supporting multiple vertically oriented magazine tubes 150B each holding a vertical stack of empty containers 200 in end-to-end relationship for dispensing to the carousel 140 and its container holder 146. The rotary magazine may be mounted above the carousel 140 on frame 111 or an independent magazine support frame. Each of the vertical tubes 150G is rotatable about rotational axis RA of the magazine into the same container dispensing position and station as the single tube container magazine 150 previously described herein. The tube dispensing function is the same as the single magazine. In either embodiment, container magazine 150 or container magazine 150A can be detachable. This would allow for quickly providing more containers 200 without having to load container magazine 150 or container magazine 150A during use. In another embodiment, an empty container magazine 150 or an empty container magazine 150A can be disposed to collect filled sample containers 200 for transport to a laboratory or handling system for a laboratory for further processing.

In the non-limiting illustrated embodiment, agricultural sample container 200 may have a construction and customized features adapted for use with packaging apparatus 110 and additional equipment to containerize agricultural samples (e.g., soil samples or others) and to subsequently unload the compacted sample material from the container (not shown). Accordingly, sample container 200 is distinguishable from ordinary tubes which may have plain capped ends.

Sample container 200, shown alone in FIG. 31, has an elongated cylindrical hollow and tubular body 202 forming walls of the container and is terminated by a top end 203a and opposite bottom end 203b closed and sealed by a pair of circular end caps 204. The body defines an interior space 206a which holds the sample material. Caps 204 may be made of metallic or non-metallic (e.g., plastic or other) materials. In one embodiment, the container body and caps 204 are formed of plastic. One end cap 204a may be a fixed or stationary cap configured for detachable coupling to top end 203a of the container 201. The top end cap 204a is a flexible/deformable snap-on type cap formed of polymeric material which snaps onto the container 200 and is retained by a frictional snap fit. Top end cap 204a is circular and includes a circumferential groove 204c which is configured for grasping by the container decapper 160, as further described herein.

The other remaining end cap 204 may be a movable push-pop end cap 204b which is slideably received inside the container 200 adjacent to bottom end 203b of the tubular body of the container. Push-pop cap 204b is slideably moveable from end 203b of the tube towards the other end 203a and vice-versa during the sample container fill operation.

One unique aspect of sample container 200 is push-pop cap 204b which includes a plurality of downwardly and outwardly projecting spring-action retention protrusions 205 configured to slideably engage the interior walls of the sample container 200. Retention protrusions 205 may be separately mounted to the perimeter and peripheral edge of cap 204b, or may be integrally formed as part of a single monolithic unitary cap structure as illustrated herein. In one preferred but non-limiting embodiment, the push-pop cap 204b and retention protrusions 205 may be such a one-piece unitary structure made of a suitable semi-rigid but resiliently deformable plastic material having an elastic memory (e.g., polyethylene, polypropylene, etc.). Retention protrusions 205 in other embodiments, however, may be separate elements formed of spring metal or resilient deformable plastic affixed to cap 204b.

In one embodiment, retention protrusions 205 may each have a somewhat squared-off or U-shaped configuration as shown; however, other shaped retention protrusions may be used and the shape does not limit the invention. This gives the push-pop cap 204b a somewhat castellated shape. The free terminal ends 205a of the retention protrusions may be outwardly flared forming tabs which can positively engage corresponding complementary configured arcuately curved and elongated retention slots 202c of sample container 200. This gives the protrusions 205 a somewhat L-shaped configuration with the protrusions appearing as downwardly extending legs from cap 204b with out-turned ends. Slots 202c are oriented cross-wise in the tubular sample body perpendicularly to its cylindrical wall. The protrusions 205 may be circumferentially spaced apart as shown around the entire perimeter and periphery of the push-pop cap 204b. Six retention protrusions 205 may be provided in one non-limiting embodiment; however, fewer or more protrusions may be provided.

The circumferentially elongated retention slots 202c formed in the cylindrical walls 202a of the sample container 200 are selectively engageable with retention protrusions 205a to lock or unlock the push-pop cap 204b from the sample container depending on the position of the cap inside the container. Cap 204b therefore is sized in diameter to be fully inserted inside the interior space of the sample container whereas cap 204a is sized larger for affixation to the top end of the container. Slots 202c may be through slots in one embodiment extending completely through the walls of the container. Retention slots 202c are disposed proximate to bottom end 203b of sample container 200 and spaced slightly inwardly from the end of the container. The opposite end of the container receives the removable top end cap 204a.

In other possible embodiments, the lower cap 204b of container 200 may instead be a snap-on type end cap similar to the top end cap 204a previously described herein if a push cap function is not desired.

Sample container 200 may be formed of plastic, metal, or other suitable materials. In one preferred but non-limiting embodiments, the container body and caps 204a, 204b are made of a suitable plastic material (e.g., polyethylene, polypropylene, etc.). The elongated container body may be opaque or clear; the latter one allowing the sample to be visually inspected. Although the container 200 is disclosed as being cylindrical in shape, other shapes and forms of sample containers may be used in other possible embodiments.

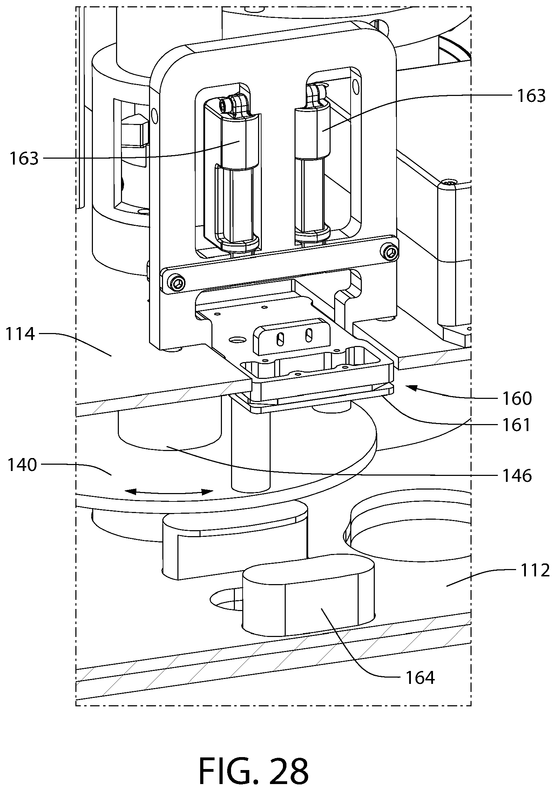

Referring primarily to FIGS. 28-30, the sample packaging apparatus 110 further includes a movable decapper 160 which is a mechanism operable to remove detachable top end cap 204a from the top end 203a of sample container 200. The decapper may be mounted to the underside of intermediate platform 114 of the apparatus support frame 111 to enable the carousel 140 to rotatably position and engage the top end cap 203a of container 200 with the decapper when the container is positioned in the carousel container holder 146. The decapper 160 is located at a fixed location on the support frame, which may be referred to as a decapper station accessible by the rotating carousel 140 (see, e.g., FIGS. 24-25) in one rotational position of the container holder 146 of the carousel. The decapper station may be denoted by a spaced apart pair of guide blocks 164 fixedly mounted to baseplate 112 of apparatus support frame 111. For reference, FIGS. 24-25 show a top end cap 204a schematically (in cross hatched lines) positioned at the decapper 160 in a position where it is held by decapper as the soil sample is filed and compacted in container 200 which is shown at the sample fill and compaction station.

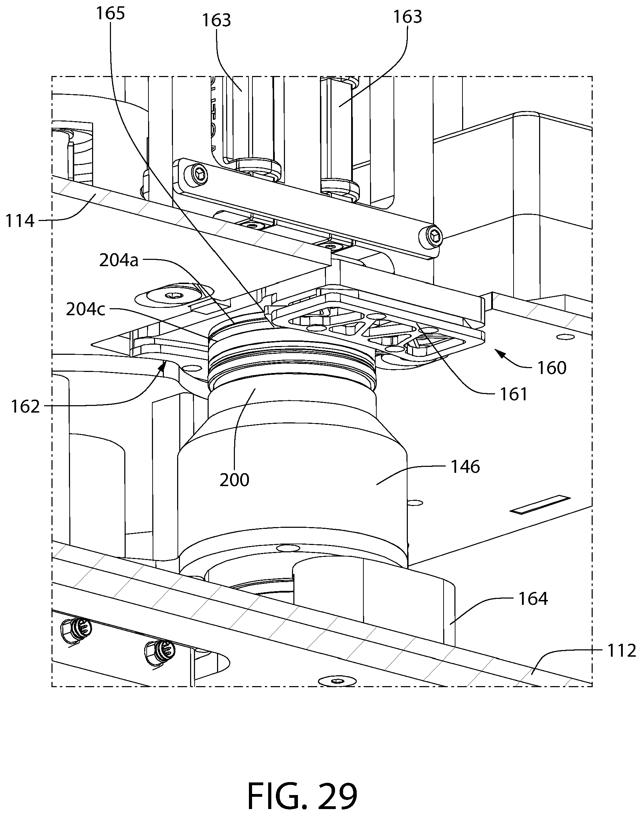

The lower portion of the sample container 200 projecting below the bottom edge 146a of the container holder 146 of carousel 140 which slides around on the baseplate 112 is received between and positioned within the blocks 164 for the container decapping operation (see, e.g., FIGS. 29-30). The holder bottom edge 146a terminates above the top of the blocks 164 and may be wider in diameter than the spacing between the blocks. The guide blocks ensure that the container 200 is properly positioned to enter the engagement recess 162 of the decapper 160. Notably, the guide blocks 164 further include inwardly projecting rails 146a configured to slideably engage the circumferential restraint groove 146b formed in the exterior of the lower body of the sample container (see, e.g., FIGS. 28 and 30-31). The rails and groove constrain the container 200 from being raised when the top end cap 204a of container is being lifted vertically off by the decapper 160, as further described herein.

Although the decapper 160 is fixed in location relative to the frame 111, the decapper is vertically movable during the container decapping operation, as further described herein.

The decapper 160 comprises a flattened and broadened C-shaped body which may be formed of at least one metallic plate 161. The decapper plates 161 defines a concave engagement recess 162 which faces towards top end cap 204a of the container 200 when positioned at the decapper station. Recess 162 has a semi-circular shape complementary configured to the radius of curvature of the circular container end cap 204a. Decapper 160 is configured to slideably receive and engage container top end cap 204a within the concave recess 162. A pair of opposed inwardly facing edges of the decapper 160 formed within the recess 162 are engageable with the complementary configured circumferential groove 204c formed in the container top end cap 204a (best shown in FIGS. 29 and 31). A plastic resiliently flexible plastic leaf spring 165 may be provided with and mounted to the decapper plate(s) 161 within recess 162 which helps create positive engagement with groove 204c to lock end cap 204a to the decapper.

The decapper 160 comprises at least one, but preferably a pair of linear actuators 163 operably coupled to the decapper C-shaped body 161. The pair of actuators provides a dynamically balanced lifting force to the decapper and ensures smooth operation. Actuators 163 may be mounted on the top surface of intermediate platform 114 of apparatus support frame 112 above the decapper body 161. Actuators 163 may be any suitable commercially-available electric, pneumatic, or hydraulic linear acting actuator. In one embodiment, electric linear rod actuators such as those available from Actuonix Motion Devices of Vancouver, Canada may be used. The actuators 163 move the decapper 160 between a downward position to first engaging the top end cap 204a, and then an upward position to pull the snap-on cap off of the container. End cap 204a is formed of a plastic material in one embodiment which has the required elastic deformation properties necessary to form the snap fit to the top end 203a of the sample container tubular body.

In operation, with the decapper 160 in its downward position and an empty capped container positioned in the carousel container holder 146, the carousel 140 is rotated to insert the top end cap 204a of the container into the open engagement recess 162 of the decapper body 161 which engages the end cap. The actuators 163 are then actuated to lift and raise the decapper body 161 vertically parallel to vertical axis VA of the container packaging apparatus 110. This action "pops" the end cap 204a off of the container 200, which may then be rotated by the carousel 140 towards the compactor 130 for filling and compacting the ground soil sample material into the container, as further described herein. The end cap remains detachably coupled to the decapper 160.

After the compacted soil sample is packaged in the sample container 200, the carousel may rotate the container back to the decapper 160 for recoupling the top end cap 204a thereto by lowering the C-shaped decapper body 161 back down with the still engaged cap.

Sample packaging apparatus 110 further includes an RFID reader/writer 170. RFID reader/writer is configured and operable to read the unique RFID tag 171 identifier associated with each sample container 200. The RFID reader/writer is further configured and operable to write the unique GPS coordinates to the RFID tag associated with the location in the agricultural field where the soil sample was collected after packaging the sample, as further described herein. Other pertinent information associated with the sample may be written to the tag. The RFID reader/writer may be mounted on the underside of baseplate 112 of apparatus support frame 111 in a position over which the container holder 146 of carousel 140 rotates and passes to read the RFID tag 171 on the lower push cap 204b of the container (shown in FIG. 31). The location of the RFID reader/writer on the support frame baseplate 112 denotes an RFID station. Any suitable commercially-available RFID reader/writer may be used which is configured by associated software to provide the intended functionality may be used.

RFID reader/writer 170 is operably and communicably linked coupled to control system 2800; specifically programmable machine controller 2811 of the agricultural sample packaging system machine network 2810 shown in FIG. 2. Any suitable commercially-available RFID reader/writer may be used.

RFID reader/writer 170 can also be used to detect the presence of sample container 200. If RFID reader/writer 170 is able to read and/or write to RFID tag 171, then it can be determined that sample container 200 is present.

FIG. 2 is a high-level system block diagram showing the control system 2800 including programmable processor-based machine controller 2811 and main system controller 2820 referenced herein. System controller 2820 may include one or more processors, non-transitory tangible computer readable medium, programmable input/output peripherals, and all other necessary electronic appurtenances normally associated with a fully functional processor-based controller. Control system 2800, including controller 2820, is operably and communicably linked to the different soil sample processing and analysis systems and devices described elsewhere herein via suitable wired or wireless communication links to control operation of those systems and devices in a fully integrated and sequenced manner.

Referring to FIG. 2, the control system 2800 including programmable main system controller 2820 and/or local machine controller 2811 may be mounted on a translatable self-propelled or pulled vehicle 2802 (e.g., tractor, trailer, combine harvester, truck, ATV, etc.) including those disclosed in U.S. Application Nos. 3/260772 filed on 31-Aug-2021; 63/260776 filed on 31-Aug-2021; and 63/260777 filed on 31-Aug-2021. The vehicle may be the same vehicle which collects the agricultural samples such as soil samples. In other embodiments, the controller may be part of a stationary workstation or facility. The sampling vehicle 2802 and its boundaries are designated by dashed box in FIG. 2 (those items within the box being mounted onboard the sampling vehicle in the illustrated embodiment). The packaging apparatus 110 may be mounted on the same vehicle 2802 or a stationary workstation as the main system controller 2820, or be separate therefrom. Local machine controller 2811 is mounted on packaging apparatus 110.

Main control system 2800 generally includes programmable controller 2820, non-transitory tangible computer or machine accessible and readable medium such as memory 2805, and a network interface 2815. Computer or machine accessible and readable medium may include any suitable volatile memory and non-volatile memory or devices operably and communicably coupled to the processor(s). Any suitable combination and types of volatile or non-volatile memory may be used including as examples, without limitation, random access memory (RAM) and various types thereof, read-only memory (ROM) and various types thereof, hard disks, solid-state drives, flash memory, or other memory and devices which may be written to and/or read by the processor operably connected to the medium.

Both the volatile memory and the non-volatile memory may be used for storing the program instructions or software. In one embodiment, the computer or machine accessible and readable non-transitory medium (e.g., memory 2805) contains executable computer program instructions which when executed by the system controller 2820 cause the system to perform operations or methods of the present disclosure including measuring properties and testing of soil and vegetative samples. While the machine accessible and readable non-transitory medium (e.g., memory 2805) is shown in an exemplary embodiment to be a single medium, the term should be taken to include a single medium or multiple media (e.g., a centralized or distributed databaseplate, and/or associated caches and servers) that store the one or more sets of control logic or instructions. The term "machine accessible and readable non-transitory medium" shall also be taken to include any medium that is capable of storing, encoding or carrying a set of instructions for execution by the machine and that cause the machine to perform any one or more of the methodologies of the present disclosure. The term "machine accessible and readable non-transitory medium" shall accordingly also be taken to include, but not be limited to, solid-state memories, optical and magnetic media, and carrier wave signals.

Network interface 2815 may be configured to communicate with the soil or other bulk agricultural material collection system on the vehicle which is retrieving samples (e.g., soil, etc.) from the agricultural field, and sample post-packaging/containerizing systems such as a sample slurry preparation, processing, and chemical analysis systems and devices (collectively represented by box 2803 in FIG. 2).

The agricultural sample packaging system 100 machine network 2810 can include at least one local microprocessor-based machine controller 2811 and a plurality of different type sensors 2812. Sensors 2812 may be operably and communicably linked to local machine controller 2811 and optionally system controller 2820 through controller 2811; each controller being configured to receive and send data/signals from/to the sensors. In some embodiments, packaging apparatus 110 with local machine controller 2811 mounted thereto may be one vehicle which traverses the agricultural field along with the bulk sample collection system and main system controller 2820 may be located on a remote separate vehicle or in a stationary location.

The sensors 2812 may include full sample tube sensor 220 previously described herein, and other linear positional or status sensors 2812a integrated with cap actuator 160, compaction and sample transfer piston-plungers 150 and 155 respectively, sample blade mechanism actuator 135, and cleaning blade mechanism 140 actuator 145 to apprise the system controller 2820 of the position or status of the those devices (e.g., piston-plungers up or down, sample and cleaning blades mechanism inserted or withdrawn from die block 124, etc.). The status sensors may also include accelerometers to provide feedback to the system controller 2820 that a device of the packaging system physically moved in response to an action/motion initiated by a control signal from the controller (e.g. sample and cleaning blades mechanism inserted/withdrawn, piston-plungers up/down, etc.). Geolocation tracking sensors such as GPS (global positioning system) may also be included if the sample packaging system is mounted on a vehicle which travels across the agricultural field. Accordingly, the control system knows the operational status, position, and condition of each of at least the major components of the agricultural sample packaging system 100 under its control at any given moment. This information is used by the machine network controller 2811 and/or system controller 2820 to automatically control the entire agricultural sample packing operations of the packaging apparatus 110 via machine network 2810, and detect if an operational malfunction of packaging apparatus has occurred. This is particularly useful if the apparatus 110 is being controlled from a remote location via a communicably linked laptop, tablet, cell phone, etc. In addition, the GPS sensor 2854 communicably linked to the packaging machine network 2810 as seen in FIG. 2 permits the machine and/or system controllers 2811, 2820 to pinpoint where in the agricultural field the soil sample was collected if the sample collection system equipment is used alongside the packaging apparatus 110 when the sample is collected and then packaged. The RFID tag associated with each packaged sample permits the associated GPS geolocation information to be tracked for each sample.

The local machine controller 2811 which may be mounted onboard packaging apparatus 110 controls operation of the agricultural sample packaging system 100 in cooperation with system controller 2820 in one embodiment. In other embodiments, machine controller 2811 may control operation of the packaging apparatus 110 alone via preprogrammed control logic/instructions if the controller is not linked to a main system controller 2820, or still be communicably coupled to the main system controller for data/information exchange and programming, but not for purposes of direct control of the sample packaging system components.

Local machine controller 2811 includes all of the usual appurtenances and auxiliary electronic devices similar to main system controller 2820 (e.g., memory, power supply, etc.) for forming a normal fully functional microprocessor-based control system configured to control operation of packaging apparatus 110.

With continuing reference to FIG. 2, the RFID reader/writer 170 previously described herein which is mounted on packaging apparatus 110 is operably and communicably coupled to packing system machine network 2810 via communication link 2852. Communication link 2852 may be wired or wireless. The unique RFID tag 171 associated with each collected and packaged agricultural sample in sample tube 202 may be automatically scanned and read in one embodiment when end cap 204b which may contain the tag is positioned near RFID reader/writer 170 on baseplate 112 of the packaging apparatus support frame 111 via rotation of the carousel 140 after the empty container 200 is loaded onto the carousel. The tag may be read in some embodiments when the packaging apparatus 110, which may be mounted on the sampling vehicle 2802, is located where the soil sample was collected from the agricultural field. This ensures that the correct geolocation (GPS coordinates) are associated with each sample. The unique sample ID information is transmitted to packaging system machine controller 2811, which may in turn share that information with the main system controller 2820. The unique RFID tag 171 associated with each sample container 200 and its sample contents allows the sample to be tracked from initial packaging, other staging and processing of the sample pending chemical system, and finally chemical analysis. With use of the GPS information collected for each sample that identifies the exact location in the agricultural field where the sample was collected, the chemical analysis results of the analytes of interest may be readily correlated back to a particular location or region in the field to determine the soil amendments necessary there.

The packaging system 100 may be locally controlled by machine controller 2811, which in turn is controlled and programmed by an personal electronic device (PED) 2851 with onboard microprocessor, memory, power supply, and all other usual auxiliary device and components associated with such devices. Such personal electronic devices 2851 may include for example without limitation a tablet, laptop, notebook, cell phone, and other similar devices located onboard vehicle 2802. Device 2851 acts as a user interface and input device which initiates automated operation of the agricultural sample packaging system 100 and packaging apparatus 110 via machine controller 2811. Personal electronic device 2851 may have a graphic user interface such as a touchscreen for such a purpose. Personal electronic device 2851 is operably and communicably coupled to packing system machine network 2810 via communication link 2853, which may be wired or wireless.

It bears noting that in embodiments where the entire agricultural sampling collection, packaging, and chemical analysis systems are mounted on a single field vehicle 2802 for in-situ analysis of the samples, the agricultural sample packaging system 100 may be controlled by the main system controller 2820 in lieu of a separate machine controller 2811. In such a case, the array of packaging system sensors 2812 may communicate directly with system controller 2820.

The network interface 2815 can be configured for wired and/or wireless bidirectional communications which may include at least one of a GPS transceiver, a WLAN transceiver (e.g., WiFi), an infrared transceiver, a Bluetooth transceiver, Ethernet, Near Field Communications, or other suitable communication interfaces and protocols for communications with the other devices and systems including the agricultural sample packaging system 100. The network interface 2815 may be integrated with the control system 2800 as illustrated in FIG. 2, the machine network 2810, or elsewhere. The I/O (input/output) ports 2829 of control system 2800 (e.g., diagnostic/on board diagnostic (OBD) port) enable communication with another data processing system or device (e.g., display devices, sensors, etc.).

The programmable controller 2820 may include one or more microprocessors, processors, a system on a chip (integrated circuit), one or more microcontrollers, or combinations thereof. The processing system includes processing logic 2826 for executing software instructions of one or more programs and a communication module or unit 2828 (e.g., transmitter, transceiver) for transmitting to and receiving communications from the machine network 2810 of sampling machine or vehicle 2802 via direct communication link 2831 or network interface 2815. The communication unit 2828 may be integrated with the control system 2800 (e.g. controller 2820) or be separate from the controller. In one embodiment, the communication unit 2828 may be in operable data communication with the machine/vehicle network 2810 via a diagnostic/OBD port of the I/O ports 2829.

Programmable processing logic or instructions 2826 of the control system 2800 which directs the operation of system controller 2820 including one or more processors may process the communications (i.e. data/information) received via the communication unit 2828 or network interface 2815 from the agricultural sample packaging system 100 including without limitation sensor associated with the status and operation of the packaging apparatus 110 and components thereof under the control of programmable system controller 2820. The memory 2805 of control system 2800 is configured for preprogrammed variable or setpoint/baseline values, storing collected data, and computer instructions or programs for execution (e.g. software 2806) used to control operation of the controller 2820, which in turn controls operation of packaging apparatus 110 and sample processing/analysis devices 2803. The memory 2805 can store, for example, software components such as testing software for analysis of soil and vegetation samples for performing operations of the present disclosure, or any other software application or module, images 2808 (e.g., captured images of crops), alerts, maps, etc. The system 2800 can also include an audio input/output subsystem (not shown) which may include a microphone and a speaker for, for example, receiving and sending voice commands or for user authentication or authorization (e.g., biometrics).

In some embodiments of agriculture sample packaging system 100 can further preferably include a sensing system 2812 comprising a plurality or array of different type sensors useful and associated with packaging and tracking the soil sample. The sensing system and its sensors are in data and control communication with packaging system machine controller 2811 and/or main system controller 2820. Other sensors which communicate with system controller 2820 may be associated with operation of the sample collection apparatus 8002 and components thereof including various equipment positional or orientation sensors, proximity sensors, etc. The agricultural material sample packaging system in combination with sensing system can provide complete automated control of the sample collection apparatus 8002 via the packaging system machine controller 2811 and/or main system controller 2820.

The main system controller 2820 communicates bi-directionally with memory 2805 via communication link 2830, machine or sample collection system network 2810 directly via communication link 2831 and/or alternatively via communication link 2837 associated with network interface 2815, the network interface 2815 via communication link 2832, display device 2830 and optionally a second display device 2825 via communication links 2834, 2835, and I/O ports 2829 via communication links 2836. System controller 2820 further communicates with the soil sample processing and analysis systems and devices 2803 via the wired/wireless communication links 5752 previously described herein via the network interface 2815 and/or directly as shown.

Display devices 2825 and 2830 can provide visual user interfaces for a user or human operator. The operator may be located onboard the mobile vehicle in one embodiment which traverses the agricultural field or at a remote operating position or station distal from the packaging apparatus 110. The display devices may include display controllers with onboard programmable microprocessors. In some embodiments, the computerized display device 2825 may therefore be a portable tablet device, cell phone, laptop, notebook, or other processor-baseplated computing device with a touchscreen and/or keyboard (software baseplated or physical hardware) that acts as an input/output device and which displays data (e.g., equipment status and position, and other relevant operational and maintenance information) and communicates with controller 2820. The computerized display device 2825 therefore receives input from the user or operator for controlling packaging apparatus 110.

A method or process for packaging an agricultural sample will now be described. In one embodiment, the sample may be a soil sample which will be used for convenience and without limitation as a basis for describing the operation of agricultural sample packaging system 100 disclosed herein. FIG. 1 is a high-level process flow chart providing a summary overview of the general packaging process steps. General reference is made to FIGS. 2-31 as appropriate.

The method begins with depositing the bulk soil sample material into grinder 120 via loading funnel 122. The bulk sample material may be in the form of elongated soil cores extracted from the agricultural field, or another form. The sample material is then ground by rotating the grinding blades 126 at a desired rate of speed (RPM-revolutions per minute). After passing through the grinder, the ground soil sample material is deposited into the transfer vessel 118 below.

Concurrently with, or prior to the foregoing grinding operation, an empty sample container 200 with top end cap 204a in place is loaded into container holder 146 of carousel 140 in the manner previously described herein (i.e. rotating container holder 146 and container feed cutout 147 beneath the vertical container magazine 150). This may be referred to as the empty container pickup station of the carousel.

In the next step, the carousel 140 may rotate to position container 200 at least partially above the RFID reader/writer 170. In some instances, the reader/writer preferably may be provided with enough proximity and sensitivity to read the RFID tag 171 of the container near its bottom (e.g.,. on push cap 204b or elsewhere) without rotating the container out of the empty container pickup station. In either case, the unique container tag ID (numerical and/or alphabetical) is read by the RFID reader/writer 170 and may be communicated to the control system controllers 2811 and/or 2820.

Carousel 140 may then be rotated to the decapper 160 where the top end cap 204a is removed from the empty container 200 and temporarily held while the container is next filled.

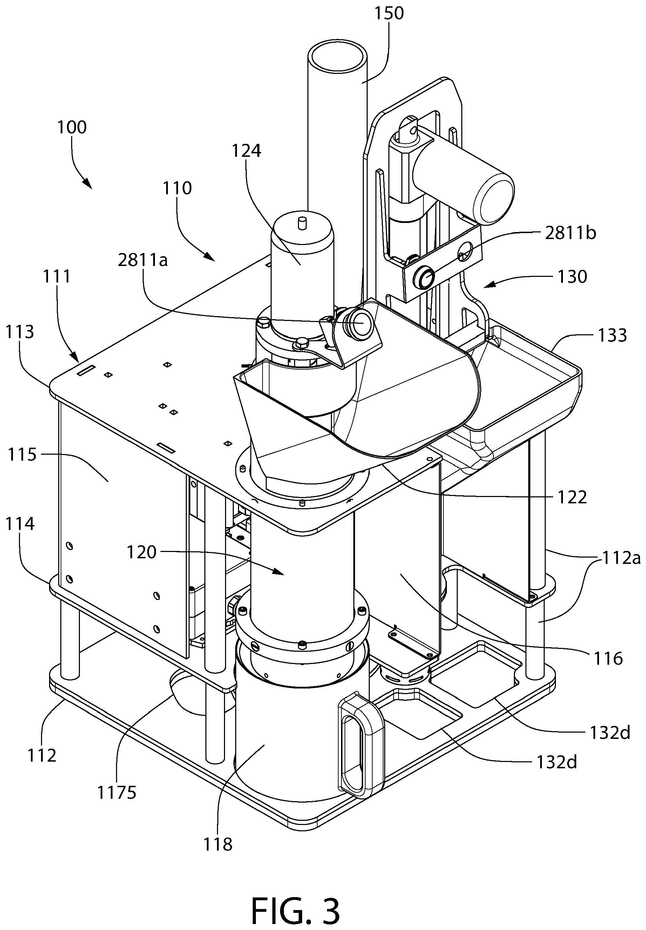

Carousel 140 may be next be rotated to position the empty sample container 200 (with now open top end) at the container fill and compaction station beneath compactor 130 (see, e.g., FIGS. 3-8, 17-19, and 24). The container is now read for filling.

Next, with the pivotable compactor loading funnel 133 in the inward position (see, e.g., FIG. 18) on the compactor 130, the ground soil sample may be manually dumped into the funnel 133 from the sample transfer vessel 118. The ground sample material flows by gravity from the funnel into compactor feed tube 132 and into the empty container 200 below. The still loosely-packed ground sample material fills the container and preferably portion of the feed tube above the top of the container to at least the bottom edge 132c of the tube front loading port 132b, or typically above. This overage or excess amount/volume of sample material will be pressed downwards and into the sample container 200 during the compaction process.

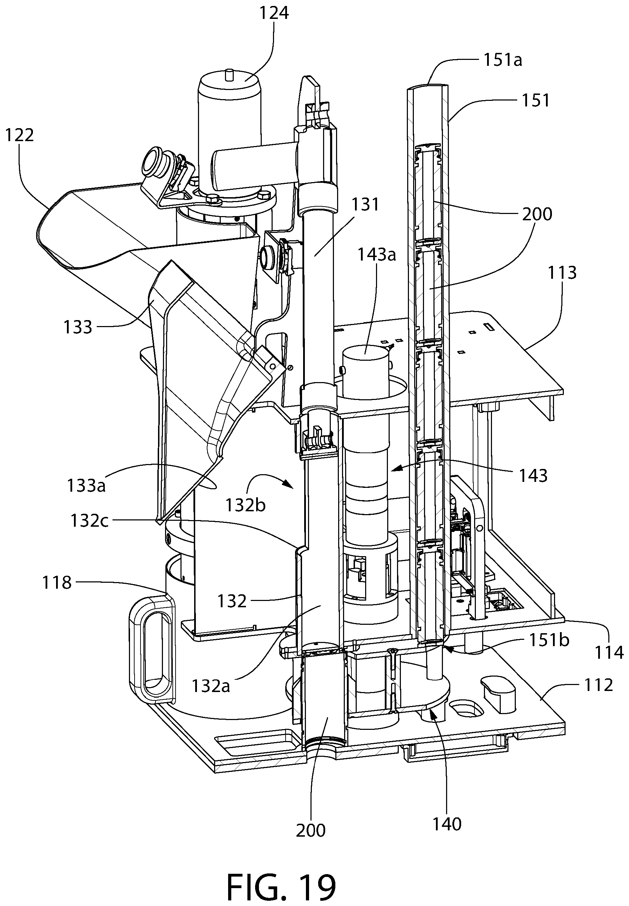

After the container 200 and portion of feed tube 132 are filled with the loosely-packed ground sample material as noted above, the compactor loading funnel 133 is pivotably moved to its outward position to disengage the funnel from the front loading port 132b of compactor feed tube 132 (see, e.g., FIG. 19). Excess ground sample material above the bottom edge 132c of the compactor front loading port 132b will fall out of and away from the feed tube 132 without support from funnel 133. At least one dump opening 132d through the baseplate 112 plate adjacent the feed tube may be provided to dump the excess sample material therethrough back to the agricultural field or a waste bin. Two dump openings are shown. The soil line of the loosely packed soil sample material remaining in the feed tube 132 will be at a horizontal level substantially equal to the bottom edge 132c of the feed tube front loading port 132b. This completes the container fill step.

Next, in the compaction step, the piston drive mechanism 134 is activated which actuates the vertically movable plunger 131. The compaction plunger moves downward through feed tube 132 to compact the heretofore loose soil sample material in the lower portion of the feed tube (at and below front loading port 132b) and in sample container 200. Plunger 131 may move at least all the way down to the bottom end of the feed tube 132 during this compaction step, and optionally may enter the top portion of the container in some embodiments. After the soil sample material in the container is compact, the plunger is vertical withdrawn and moves back upward to at least the top of the feed tube 132 to be readied for the next sample fill and compaction cycle. If one cycle of downward compaction movement of the plunger 131 is not sufficient to completely pack the soil sample material in the container, multiple reciprocating upward/downward strokes may be used until the soil is thoroughly compacted.

In the next step, the carousel 140 may rotate to position the filled and compacted sample container 200 (still with open top) back to the RFID reader/writer 170. The GPS data coordinates associated with the collection location of the sample in the agricultural field is written onto the RFID tag 171 of the container.

In the next recapping step, the container 200 is then rotated back to the decapper station where decapper 160 reinstalls the top end cap 204a back onto and seals the container. In some implementations of the method or process, it is possible that the GPS data may be written onto the RFID tag 171 of the container after the recapping step.

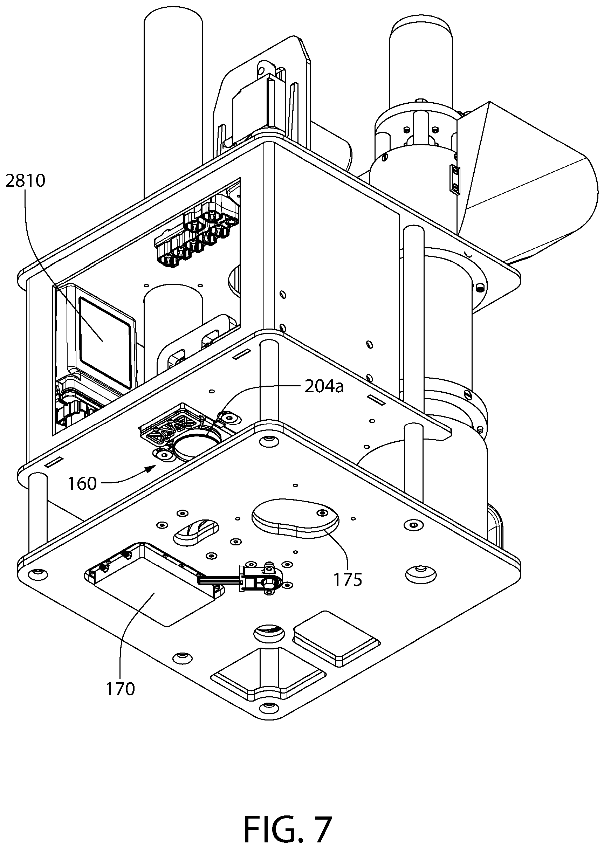

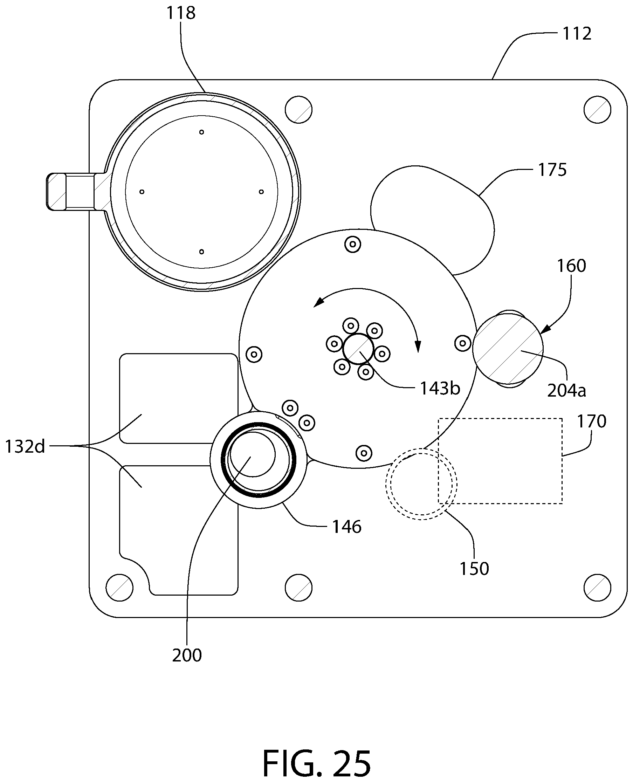

Next, the filled and capped sample container 200 is rotated via carousel 140 to the filled container discharge opening 175 formed completely through the plate of baseplate 112 of apparatus support frame 111 (see, e.g., FIGS. 7 and 25). The container drops through the opening into a collection bin or other device (not shown) for further processing. Opening 175 may be an elongated shape as shown or another shape so long as it is larger than the diameter of the sample container 200 to positively eject the filled container from the packaging apparatus 110.

In one embodiment, the foregoing method or process for operating agricultural sample packaging system 100 may be automatically implemented and controlled fully or in part by the control system controllers including programmable local machine controller 2811 and/or main system controller 2820 communicably coupled to the main controller. Controller 2811 and/or controller 2820 are operably and communicably coupled and linked to the components of the packaging apparatus 110 previously described herein, and programmable to execute suitable control logic/program instructions (e.g., software) to fully or partially automatically control operation of the entire sample packaging system 100.

In some embodiments, operation of the sample packing apparatus 110 may be initiated at least partially manually via one or more local switches or actuators such as grinder actuator 2811a and compactor actuator 2811b (see, e.g., FIG. 3) which activates the controller 2811 and/or controller 2820 to start the sample packaging operations. In one design and control scenario, these actuators may be operably coupled to local packaging apparatus machine controller 2811 (which in turn is operably coupled to controller 2820 as further described herein), which when pushed or activated by a user will in turn activate the grinder 120, compactor 130, and carousel 140 at the proper times and in proper sequence. In another design and control scenario, grinder actuator 2811a and compactor actuator 2811b may be local switches which when manually pushed or activated by the user separately initiates the grinding and compacting operations. In this case, activating the grinder actuator turns on the grinder to grind the bulk sample material and deactivating the actuator stops the grinder. The same applies for operation of the compactor actuator 2811b and compactor 130. The controllers 2811 and/or 2820 described herein may monitor the grinding and compacting operations in such a case.

In some embodiments, manually activating the compactor actuator 2811b may automatically implement all steps of the process or method previously described herein associated with operation of the carousel 140 and compactor 130 such as for example dispensing the empty sample container 200 onto the carousel, decapping, loading and compaction of ground soil sample material into the container, recapping the container, RFID read and write operations, and discharging the filled and sealed container from the packaging apparatus 110. Writing of GPS coordinates to RFID tag 171 can occur automatically upon actuation of grinder actuator 2811a or compactor actuator 2811b via local switches. Upon activating grinder actuator 2811a or compactor actuator 2811b, a signal is sent through controllers 2811 and/or 2820 to RFID reader/writer 170 to write the GPS coordinates to RFID tag 171. Sample packaging apparatus 110 will be stopped at the sample location in the field for the sample to be taken from the field and processed through the sample packaging apparatus 110. Having the automatic writing of the GPS coordinates upon actuation of grinder actuator 2811a or compactor actuator 2811b eliminates the need to separately remember to write the GPS coordinates.

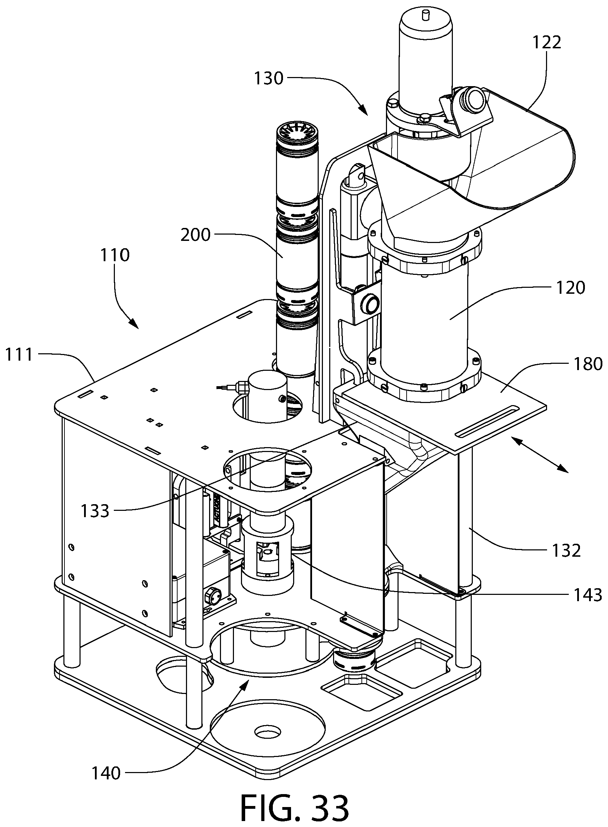

FIG. 33 depicts an alternative embodiment of sample packaging apparatus 110 in which the grinder 120 is mounted directly above the loading funnel 133 of compactor 130. This allows the ground soil sample material to fall directly into the funnel 133 via gravity, thereby advantageously eliminating the need to manually transfer the soil from the grinding step to the tube-filling and compaction step using transfer vessel 118 previously described herein. The grinder 120 may be supported independently of the compactor loading funnel 133 from the apparatus support frame 111 and/or compactor feed tube 132 so as to not interfere with the pivotably movement of the hinged funnel as previously described herein. The foregoing description and sequenced of the exemplary process/method for packaging sample material remains unchanged.

In one embodiment, the packaging apparatus of FIG. 33 may further include a slideably movable gate 180 at the interface or gap between top end of the compactor loading funnel 133 and bottom end of the grinder housing 121 from which the ground sample material is discharged. The purpose of the gate is to stop the soil after it goes through the grinder. This helps the soil mix, ensuring a homogenous soil mixture for the sample.

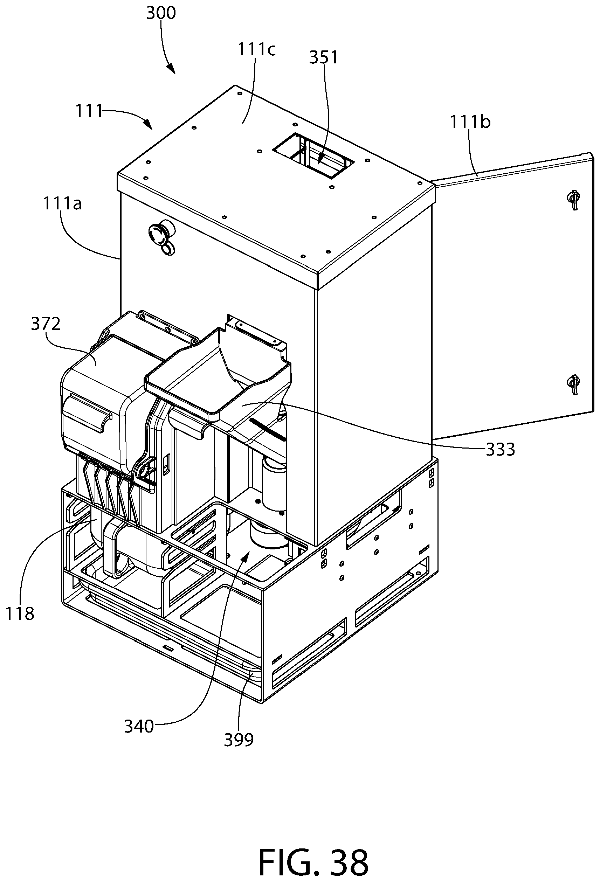

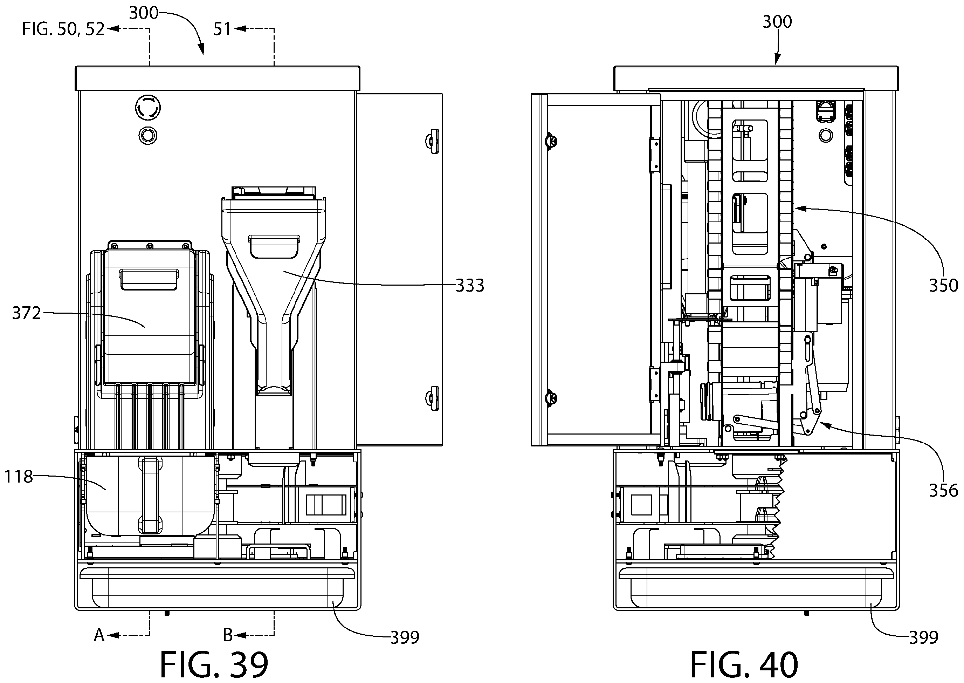

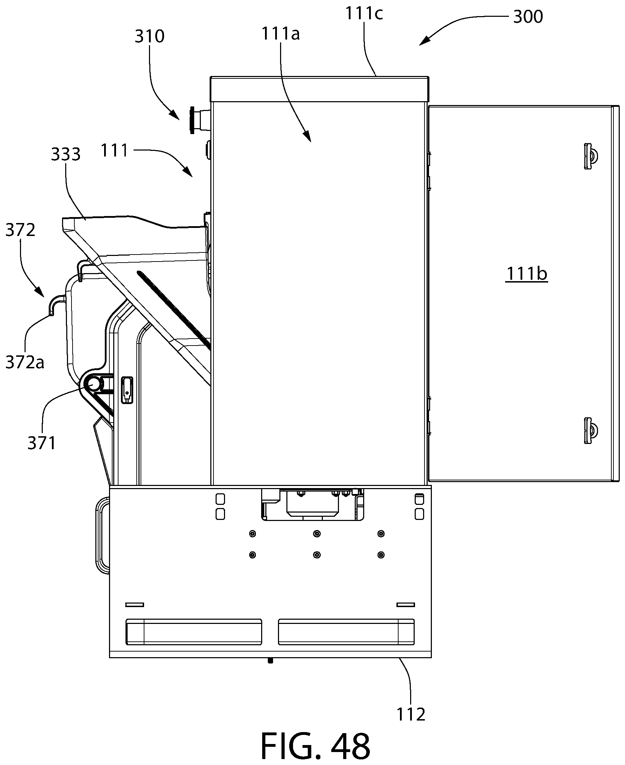

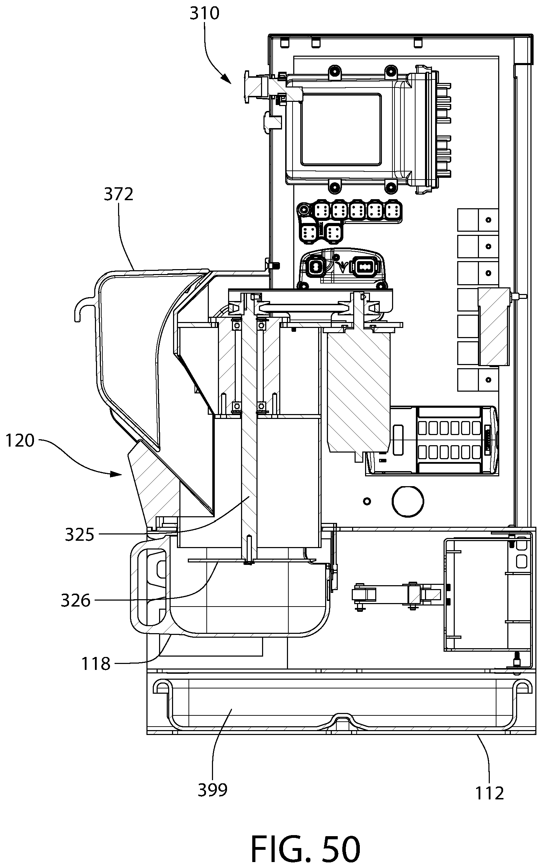

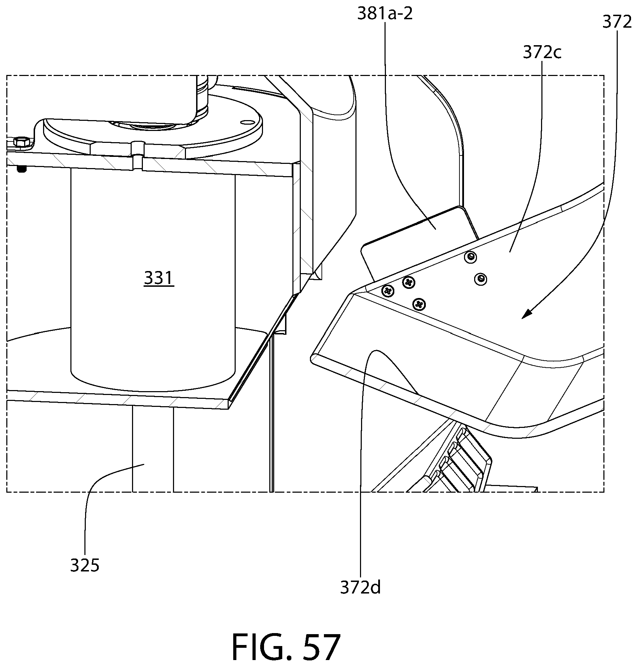

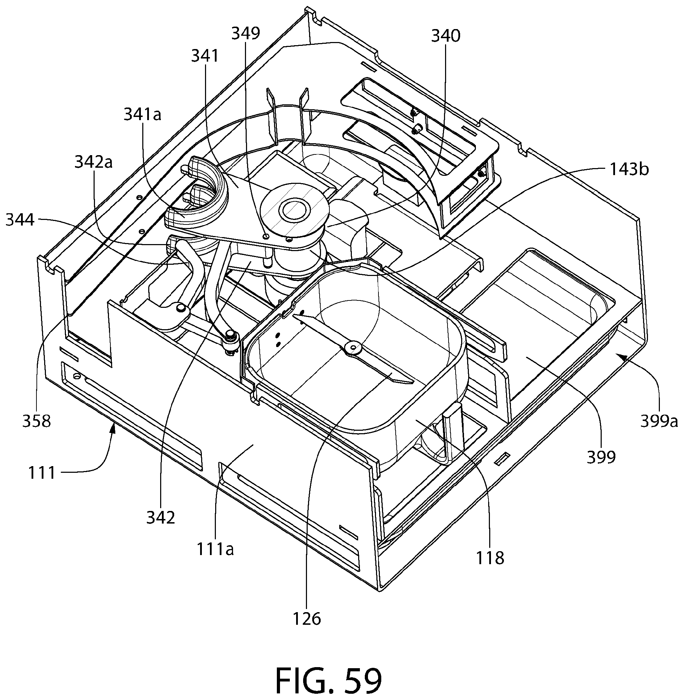

In another embodiment illustrated in FIGS. 38 to 60, an alternative sample container system 300 is shown. Sample container system 300 is similar to sample container system 100 with some modifications described below. While the modifications are illustrated for sample container system 300, the modifications can be used in sample container system 100.

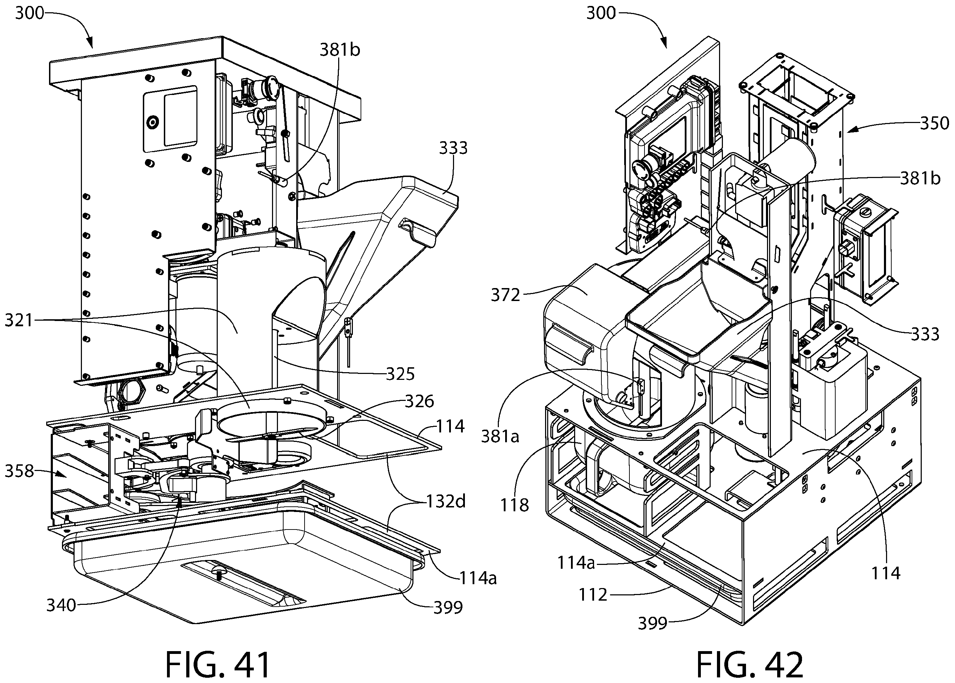

As illustrated in FIGS. 41-42 and 54-56, grinder 120 of soil sample packaging apparatus 310 is modified so that the grinding blade 326 carried by vertical drive shaft 325 of the present grinding mechanism is situated in transfer vessel 118 instead of grinding chamber 121. The cylindrical grinding chamber 121 of sample packaging apparatus 110 is replaced in the present apparatus 310 by grinder housing 321 in which no active grinding of the sample material occurs. A lower portion of the grinder housing 321 may be cylindrical in configuration. Grinding blade 326 may be disposed on the bottom end of the grinder drive shaft 325 in one embodiment as shown.

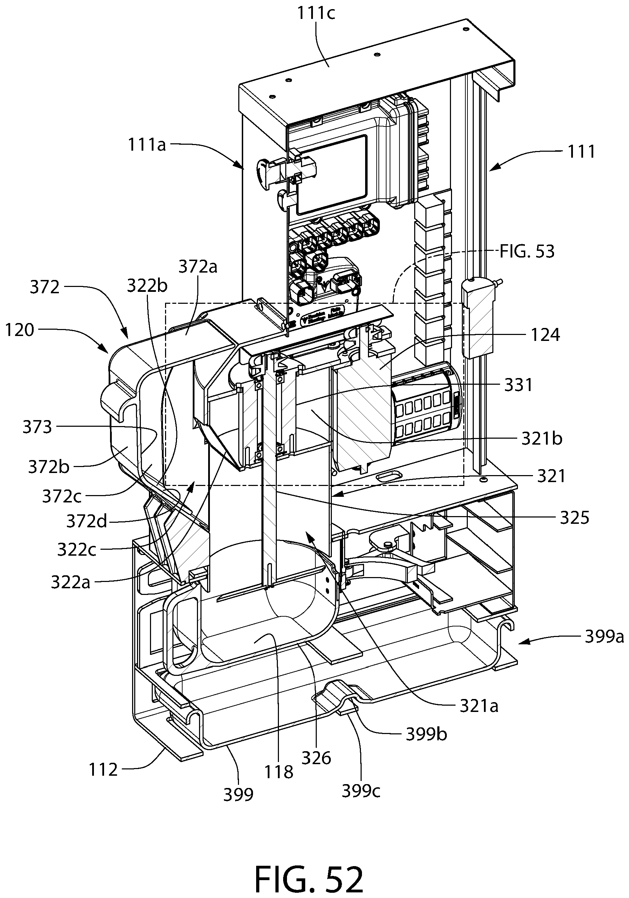

In one embodiment, the drive shaft 325 projects downwards below the bottom end of grinder housing 321 that defines material transfer chamber 321a so that grinding blade 326 may be disposed inside the transfer vessel 118 for grinding the sample material therein. Blade 326 may preferably be positioned adjacent to the open top end of the vessel 118 in one embodiment, but still below the top end of the vessel (see, e.g., FIGS. 41 and 52).

It has been discovered that the interaction between grinding blade 126 and chamber 121 in the prior sample packaging apparatus 110 described herein can adversely create a build up (i.e. accumulation) of finely ground sample material on the walls of grinding chamber 121 when the blade is positioned inside the chamber in lieu of the material transfer vessel 118, This makes it difficult to clean out the grinding chamber since it is part of the stationary grinder housing in prior sample packaging apparatus 110. Accordingly, the sample material such as soil is now ground by grinding blade 326 in present sample packaging apparatus 310 as the soil it falls into vessel 118 through blade 326 positioned just inside the vessel at top. By grinding within vessel 118, it is easier to clean vessel 118 in lieu of the prior grinding chamber because the vessel is readily detachable and removable from beneath the grinder to load the ground soil into the compactor. Alternatively, chamber 121 of the prior sample packaging apparatus 110 can be made detachable to permit cleaning of grinder chamber 121 if using that sample packaging apparatus.

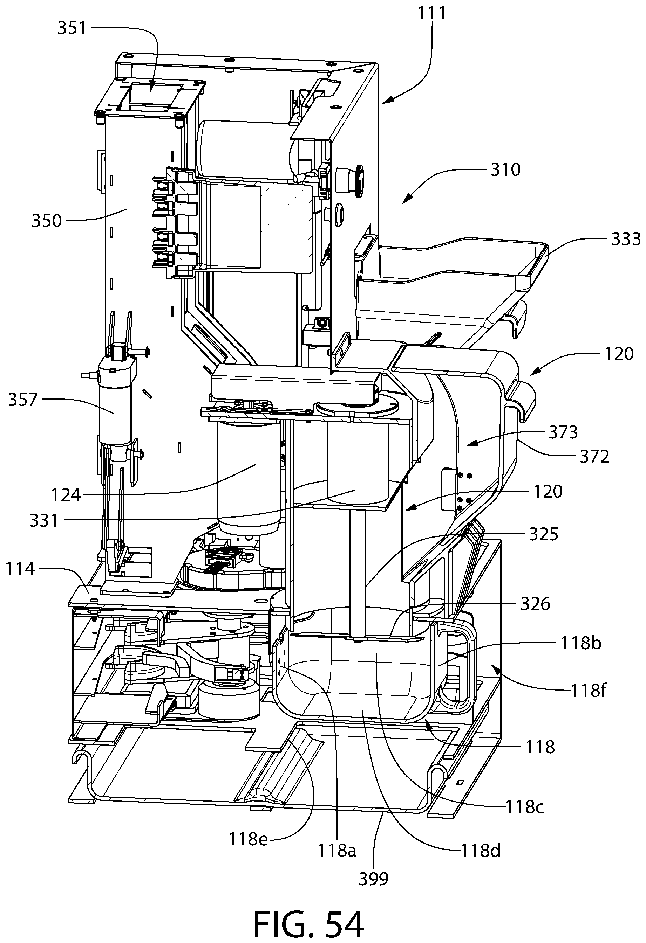

The material transfer vessel 118 is removably and slideably insertable in a horizontal direction into an appropriately sized opening 118f formed in frame 111 beneath the material transfer chamber 321a and bottom end of grinder housing 321 which defines chamber 321a (see, e.g., FIG. 54). Frame 111 supports the vessel.

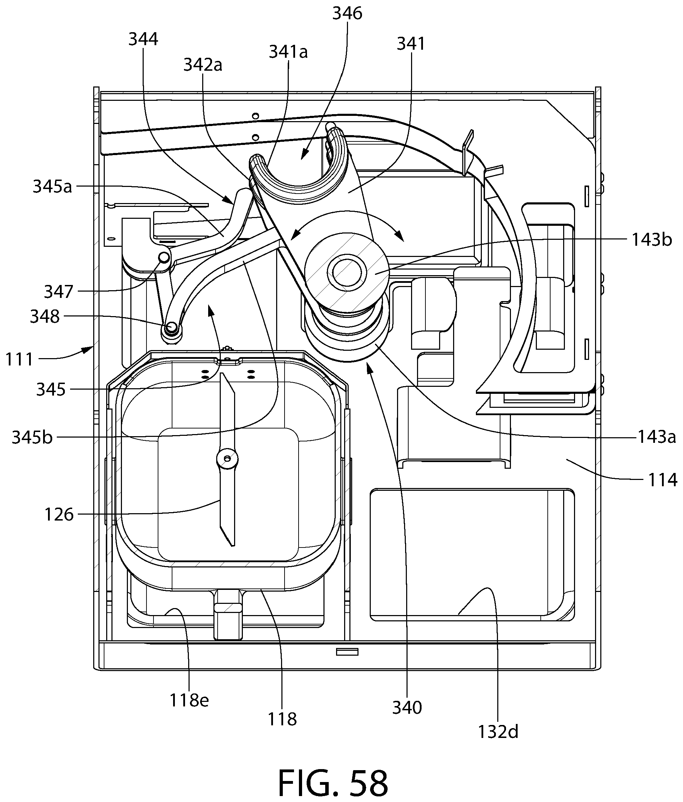

To permit the vessel to be slideably inserted beneath the grinding housing 321 and avoid interference with the downward-projected blade 326, the inboard sidewall 118a of the vessel may be shorter in height than the opposite outboard sidewall 118b to avoid interference with the grinding blade (see, e.g., FIG. 54). The two lateral sidewalls 118c extending between the inboard and outboard sidewalls may have a height similar to outboard sidewall 118b. Vessel 118 may therefore have non-circular sidewalls in one embodiment forming a generally square or rectangular cuboid configuration in which each side has includes a straight wall section (see, e.g., FIG. 58). The bottom wall 118d of vessel 118 is closed, and the sidewalls may be arcuately curved at their bottom to transition into the bottom wall thereby avoiding sharp corners where ground sample material might otherwise accumulate. Other suitably shaped transfer vessels may be used.

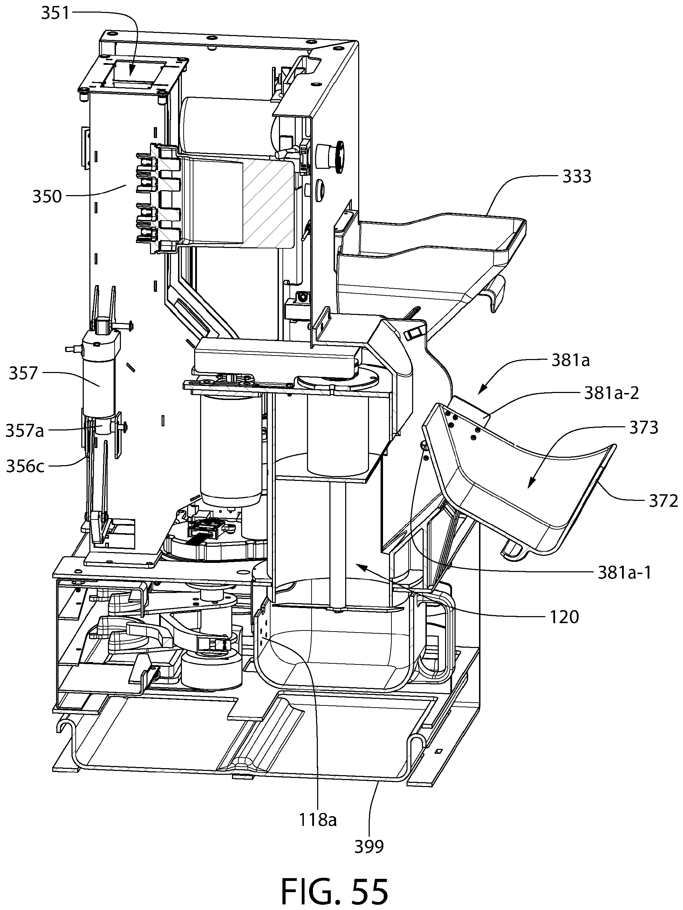

Actuation of grinder 120 is modified by replacing manually-operated grinder actuator 2811a with sensor 381a. Sensor 381a senses the presence of grinder cover 372 as further described herein. When cover 372 is closed, grinder 120 is actuated. This eliminates the need to press grinder actuator 2811a and prevents actuation of grinder 120 until cover 372 is closed. Sensor 381a can be any type of sensor that senses the presence of cover 372. Examples of sensor 381a include, but are not limited to, inductance sensor, rotary encoder, and Hall effect sensor. In one embodiment as shown in FIG. 55 for example, a Hall effect sensor may be used comprising a magnet such as magnet plate 381a-2 mounted to cover 372 and the sensing element 381a-1 mounted to grinder housing 321 at a point where the magnetic plate will pass in an arc-shaped path when the cover is rotated to the closed inward dumping position. The sensing element detects the presence and magnitude of the magnetic field generated by the magnet via the Hall effect based on the proximity of the magnet to the sensor.

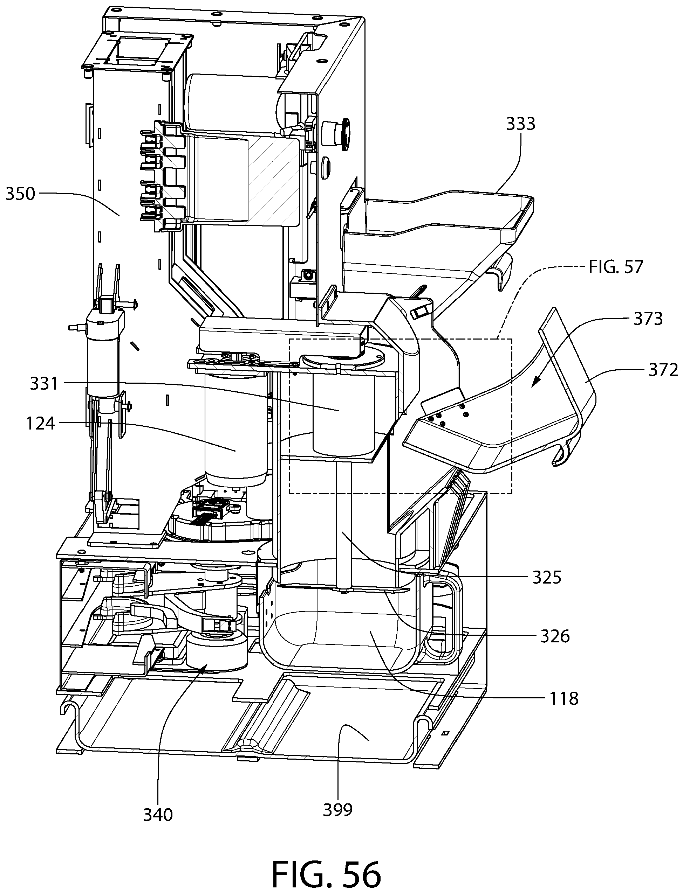

In one embodiment, the lower portion of grinder cover 372 may be hingedly coupled to support frame 111 of soil sample packaging apparatus 310 via hinge pin 371. The cover is pivotably movable between the closed inward dumping position (FIG. 54), an open outward loading position (FIG. 55), and intermediate grinder actuation position therebetween (FIG. 56). In the closed inward dumping position, the top of the cover is in battery (i.e. engaged) with the front side of grinder housing 321. Cover 372 may include an operating handle 372f for manually rotating the cover between its positions.

Cover 372 may be bin-shaped having an internal depth which defines an open soil cavity 373 configured to a hold a working volume of soil sample material for grinding. The cover may have a volumetric capacity equal to or greater than the volumetric capacity of the transfer vessel 118 in one embodiment. Any excess sample material (e.g., soil or other) which may overflow the vessel drops through a waste opening 118e in the apparatus support frame beneath the vessel (see, e.g., FIGS. 54 and 58). The soil sample may be manually loaded into the cover when in the outward open position, which may be a horizontal position rotated 90 degrees from the closed position, or a position slightly below horizontal being rotated greater than 90 degrees as shown in FIGS. 55 such that the cavity 373 faces at least partially upwards and slightly outwards for ease of loading and retaining the soil therein until the cover is closed. In the fully open outward loading position, the cover 372 when rotated greater than 90 degrees is positioned below horizontal reference plane HR.

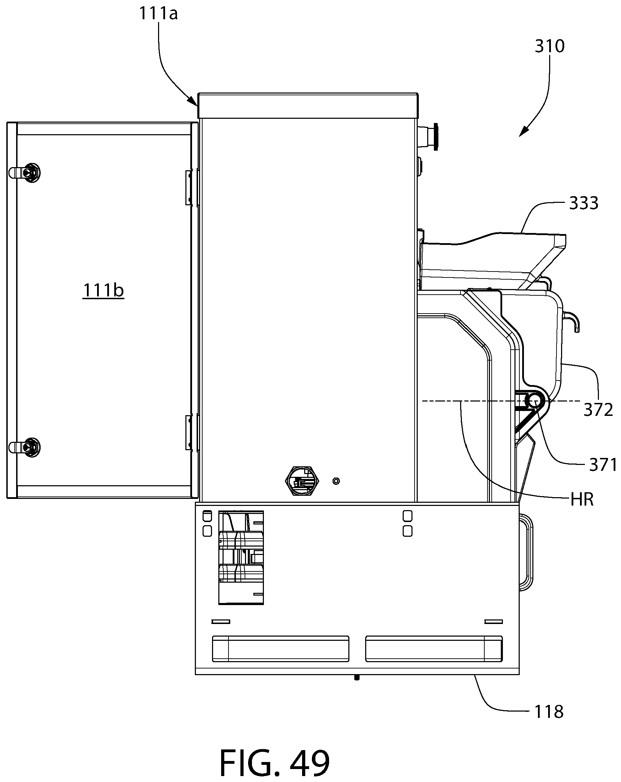

With reference to the closed position for convenience of description, cover 372 in one embodiment generally comprises a horizontal top wall 372a, vertical front wall 372b, pair of opposing sidewalls 372c, and angled feed wall 372d; all of which collectively define cavity 372a. Feed wall 372 is sloped downwards obliquely to a horizontal reference plane HR intersecting the pivot point of cover 372 (defined in FIG. 49 by pivot pin 371) to guide the soil sample to the rotatable blade 326 of the grinding mechanism, and thereafter into handled vessel 118. When the soil is dumped into grinder 120 from the cover when rotated, the soil encounters the rotating grinding blade 126 already actuated by sensor 381a before being deposited in vessel 118 which holds the ground soil sample.

Grinder housing 321 defines a material transfer chamber 321a in which the grinder drive shaft 325 is disposed albeit no active grinding of sample material occurs therein as described elsewhere. Transfer chamber 321a directs and guides soil sample material dumped from cover 372 into transfer vessel 118, but no active grinding occurs in the chamber. The grinder housing 321 may include an enclosed drive compartment 321b above the material transfer chamber 321a which houses and protects part of the grinder drive mechanism that supports the bladed grinder drive shaft from dust (e.g., fine sample particles) generated by the grinding the soil sample material inside vessel 118 below.

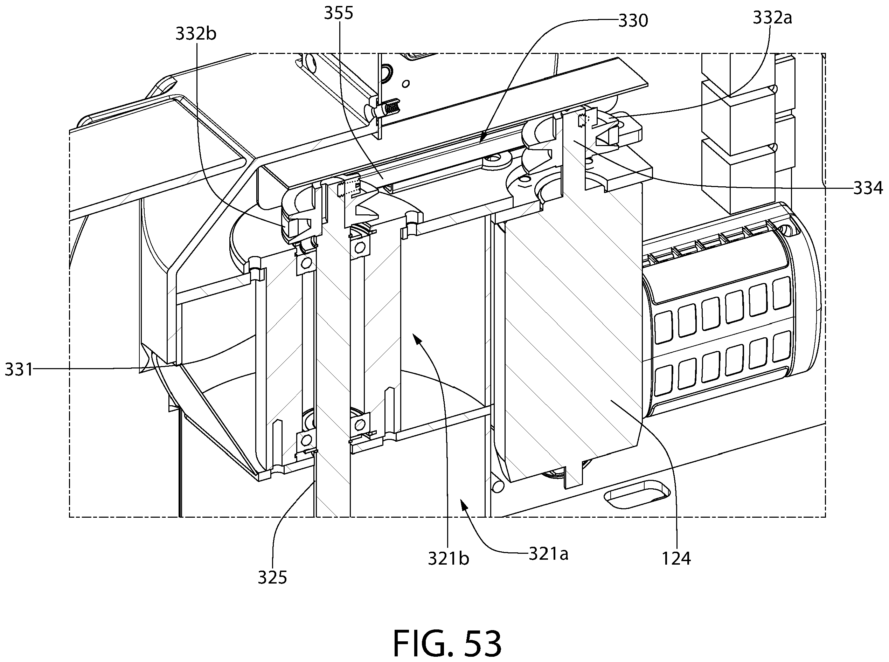

The grinder drive shaft 325 may be directly driven by electric grinder motor 124 as previously described herein, or in the present embodiment drive shaft 325 may be indirectly driven as shown in FIG. 53 via a spatially separated and linked components of drive mechanism 330. Present grinder drive mechanism 330 in one embodiment may include a drive pulley 332a fixedly coupled directly to motor shaft 334, driven pulley 332b fixedly coupled directly to grinder drive shaft 325 which supports the grinding blade 326, and a flexible drive link 335 which operably couples the drive and driven pulleys together. The top end of drive shaft 325 is rotatably supported by a bearing assembly 331, which is disposed inside drive compartment 321b. Drive link 335 may be a fiber reinforced or unreinforced rubber belt in some embodiments as shown, or a drive chain in other possible embodiments. In the later case, toothed drive and driven sprockets may replace the pulleys. In yet other embodiments, grinder motor 124 may be coupled to grinder drive shaft 325 via a gear drive. Any of the foregoing options may be used as a grinder drive mechanism.

Grinder housing 321 in one embodiment further includes an upper angled wall 322a and opposing lower angled wall 322b spaced apart to form an opening that defines a sloped loading chute 322c. Chute 322c communicates with the grinder cover 372 to receive and guide the manually dumped soil sample material therefrom downwards towards the grinding blade 326 in vessel 118. The angled feed wall 372d of cover 372 may further be configured to open or at least partially block the chute 322c depending on the rotational position of grinder cover 372. When the cover is in the open outward position, chute 322c is partially open but soil cannot exit the cover due to the upward position of the cover feed wall 372d. When the cover is then rotated to the closed inward dumping position, the chute becomes fully open for dumping and grinding the sample material in vessel 118.

In operation, grinder cover 372 is first manually opened and moved (rotated) to the outward loading position by a user. The sample soil is next manually loaded into cavity 372a of cover 372 to deposit a volume of soil in the cavity. Cover 372 is then rotated back towards the inward closed position. When the cover reaches a point partway between the inward and outward positions (i.e. intermediate grinder actuation position), sensor 381a detects the presence of the cover as previously described herein and actuates the grinder to start rotating grinding blade 126 before soil leaves the cover and falls into the material transfer chamber 321a part of the grinder housing 321. The point at which the grinder is started in one embodiment may be slightly before the angled feed wall 372d reaches approximately a horizontal position with respect to horizontal reference plane HR (see, e.g., FIGS. 56-57) to ensure soil does not leave the cover 372 and bypass the grinding blade 126 before it is in operation. When the cover 372 reaches the fully closed inward dumping position, the loading chute opening is fully open to ensure all of the soil contents of the cover fall via gravity into vessel 118 through the rotating grinding blade 326. The angled feed wall 372d of cover 372 may be configured so that it reaches approximately the same angle with respect to horizontal reference plane HR as the stationary lower angled wall 322b of grinder housing 321 which forms part of the loading chute 322c (see, e.g., FIG. 54).

It bears noting that in other embodiments contemplated, movement of grinder cover 372 between the inward and outward position may be automated via a suitable cover drive mechanism such as an appropriate electric motor or electric or pneumatic actuator configured and operable to rotate the cover. The soil sample material may also be automatically loaded into the cover 372 to provide a fully automated grinder loading operation. It is well within the ambit of those skilled in the art to provide such suitable drive components without further elaboration.

Actuation of compactor 130 is modified by replacing manually-operated compactor actuator 2811b with sensor 381b. This eliminates the need to press compactor actuator 2811b and prevents actuation of compactor 130 until the compactor loading funnel 333 of sample packaging apparatus 310 is in place (e.g., inward position as previously described herein for funnel 133). Funnel 333 is similar to funnel 133 and pivotably movable between the previously described inward and outward positions for manually loading sample material (e.g., soil in one embodiment) into the compactor 130 and dumping the excess material to waste. In the present embodiment, the compactor for the present apparatus is actuated by moving funnel 333 to its titled outward position, whose change in position 333 is detected by sensor 381b which initiates operation of the compactor. This allows excess soil to fall out of the funnel so that compactor 130 does not jam with excess soil. Examples of sensor 381b include, but are not limited to, inductance sensor, rotary encoder, and Hall effect sensor.

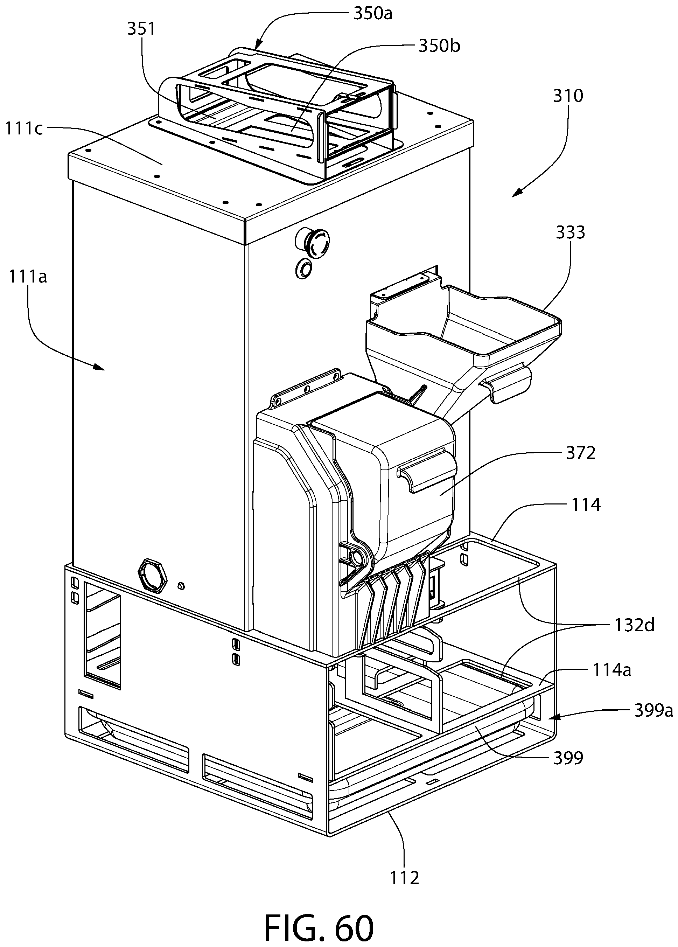

Excess soil dumped from funnel 333 when moved from its inward to outward position falls through vertically aligned dump openings 132d in intermediate platform 114 and horizontal partition wall 114a below, and can be collected in soil waste collection tray 399 located at the bottom of sample container system 300 in the tray receptacle 399a. After a multiple number of samples are processed, the soil from these samples can be combined in tray 399 as a separate soil sample to provide a composite evaluation of all of these soil samples. Tray 399 may be detachably mounted to baseplate 112 of support frame 111. The waste collection tray may be slideably received in horizontally open tray receptacle 399a formed in frame 111 adjacent to and above the baseplate 112 (see, e.g., FIGS. 52 and 60). An interlocking detent feature may be provided comprising a downwardly open detent concavity 399b formed on the underside of tray 399 and mating upwardly extending detent rail 399c formed on baseplate 112. The detent feature helps retain the waste tray in the receptacle to counter the effects of any vibrations induced if mounting the agricultural sample packaging apparatus 310 on a moving vehicle traversing an undulating agricultural field. The tray may be removed from receptacle 399a by pulling the tray horizontally outward from the receptacle with some degree of force to overcome the detent feature retention hold.

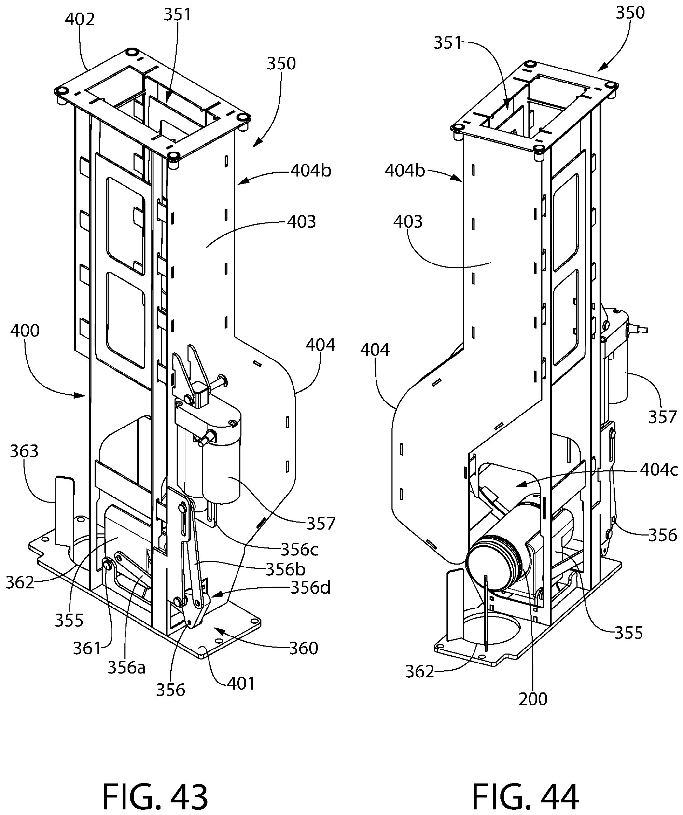

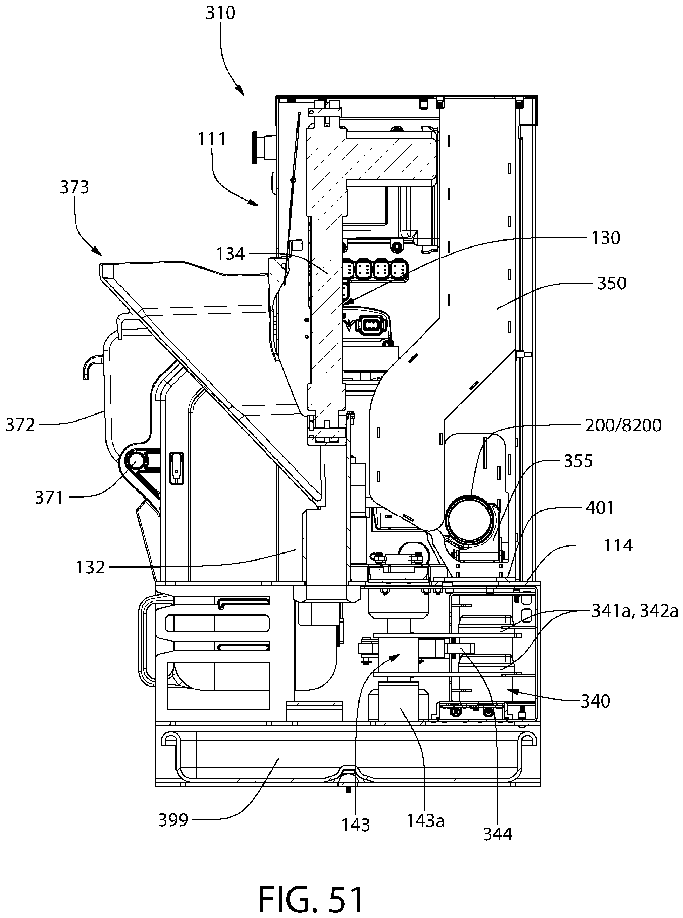

Referring generally to FIGS. 43-47 and 54-56, a compact sample container magazine 350 replaces the prior tubular sample container magazine 150 in the present agricultural sample packaging apparatus 310. Sample containers 200 are stored in a vertically-stacked horizontal orientation or position within sample container magazine 350 in side-to-side relationship (i.e. side of one container abuts the sides of the next container above or below). This advantageously increases the sample container capacity of the magazine without substantially increasing its height, thereby allowing the magazine to fit inside cabinet 111a of the apparatus further described herein. Container magazine 350 may have a vertically elongated body generally including a magazine frame 400 comprising a broad bottom base 401 mountable to apparatus frame 111 (e.g., intermediate platform 114 as shown in FIG. 51, top mounting flange 402 at the opposite end of the frame, and vertical sides 403 extending between the base and flange. Magazine 350 is mounted above the rotatable container carousel 340 to drop sample containers 200/8200 via gravity therein. Top mounting flange 402 defines top entrance opening 351 of the magazine and is configured to be mounted to the top portion frame 111 of sample packaging apparatus 310 such as top plate 111c of outer cabinet 111a in one embodiment. Magazine 350 includes an internal container feed passageway 405 which extends along a vertical container feed axis FX.

Sample container magazine 350 further includes container feed mechanism 360 comprising a rotatable container cradle 355 to change the sample containers 200 (or optionally smart containers 8200) from the horizontal orientation or position in the magazine to a vertical orientation or position for dispensing into the container carousel 140 below base 401 of the magazine. Cradle 355 may be pivotably mounted to magazine frame 400 via a horizontally oriented pivot pin 361. In one embodiment, cradle 355 comprises an arcuately curved container support surface 355 which engages and supports the container 200 by its cylindrical sidewall.

It bears noting that storing empty sample containers 200 or 8200 in a horizontal position/orientation inside magazine 350 advantageously increases the number of containers that can be held within the magazine than storing containers in a vertical end to end position in magazine 150 previously described herein.

Base 401 includes a discharge opening 362 which is in communication with the capsule and cradle for dropping sample containers into the carousel. A plurality of upright guide members 363 are disposed on and project upwards from base 401 adjacent to discharge opening 362 to guide the inverted sample container into the carousel.

The container feed mechanism in one embodiment may further comprise a bell and crank linkage 356 driven by linear actuator 357 mounted to magazine frame 400. The bell and crank linkage is movably mounted to magazine frame 400 and coupled to cradle 355, which in turn is pivotably mounted to frame 400 via pivot pin 361. One arm 356a of bell and crank linkage 356 is coupled to the side of cradle 355. The other arm 356b of the linkage is coupled to a sliding joint 356c coupled to operating rod 357a of linear actuator 357 (see also FIG. 55). In operation, extending the vertical operating rod of linear actuator 357 moves arm 356b downward, which in turn rotates coupler 356d of bell and crank linkage 356 which is pivotably coupled to magazine frame 400, to in turn move arm 356a which rotates the cradle 355 forward to an upright position. Retracting operating rod 357a into linear actuator 357 moves the bell and crank linkage 356 in an opposite direction to rotate the cradle back to a horizontal position for receiving a sample container 200 (or smart container 8200). Linear actuator 357 may be electric or pneumatic in various embodiments.

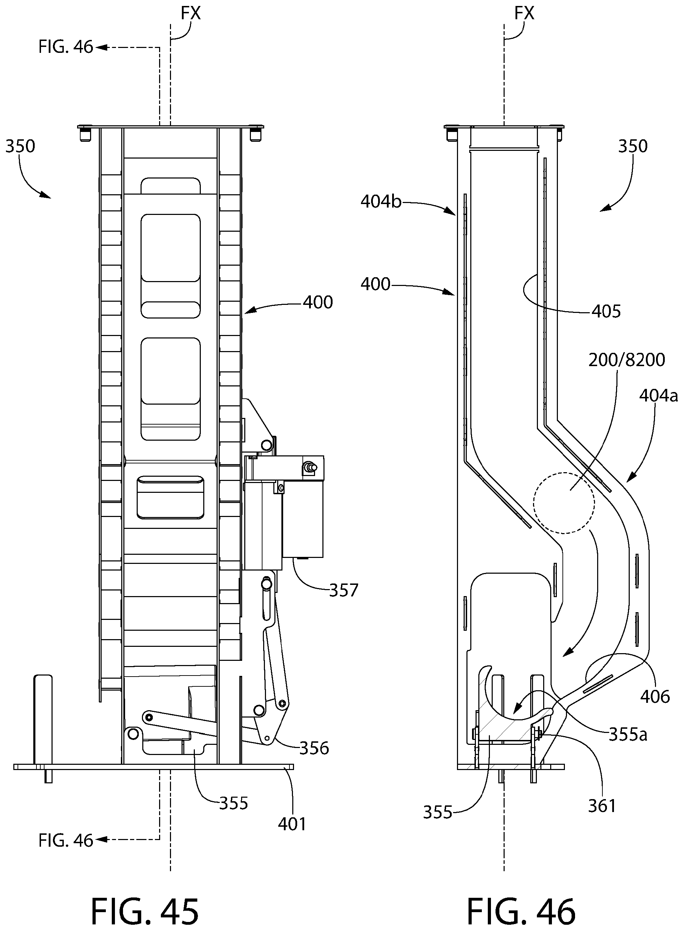

To provide overhead clearance for rotating the sample container 200 or 8200 from horizontal to vertical via the bell and crank linkage 356, container magazine 350 may include a generally (but not perfectly) C-shaped offset portion 404a best shown in FIGS. 44 and 46. The offset portion is horizontally offset from and not axially aligned with feed axis FX and the adjoining straight/linear upper portion 404b of the magazine which conversely is axially aligned with feed axis FX. The container feed passageway 405 thus has a non-linear configuration from top to bottom of the container magazine 350 which is attributed to the offset portion 404a. The lower offset portion 404a in one embodiment comprises a sloped feed surface 602 at the bottom configured to roll the lowermost sample container 200/8200 onto the cradle 355 when in its horizontal loading position. As opposed to providing an entirely vertical magazine and stack of sample containers, the offset portion 404a advantageously relieves some of the vertical pressure applied to the lowermost container in the stack attributable to the cumulative weight of the stack transmitted to the lowermost container. This may therefore provide improved loading of the lowermost container 200/8200 onto the cradle 355 without resulting in feed jams.

Notably, offset portion 404a forms a vertical headspace 404c below the offset portion down to base 401 of the container magazine 350. Headspace 404c provides a vertical height sufficient to accommodate rotating the lowermost container 200/8200 in the stack of containers from horizontal into a vertical position/orientation via cradle 355 before being dropped into the container carousel 140 below. Container cradle 355 is therefore rotatably disposed in space 404a as shown. Offset portion 404 of magazine 350 also advantageously provides some additional sample container storage capacity. Even with the offset portion, the container magazine 350 has a compact design which may be entirely enclosed inside the outer cabinet 111a of the apparatus support frame 111 in some embodiments to protect the bell and crank linkage or other moving portions of the magazine from dirt and the elements. In such embodiments, as illustrated, only the top entrance opening 351 of magazine 350 is accessible through the cabinet for loading empty sample containers into the magazine (see, e.g., FIG. 38). In other embodiments contemplated, magazine 350 may be partially or fully exposed. The invention is not limited by any of these magazine arrangements.

FIG. 46 is a side cross-sectional view of the container magazine 350 showing the non-linear shaped container feed passageway 405 and path each sample container 200 (or smart container 8200) follows from top to bottom of the magazine. The container is represented schematically by the dashed circle shown and arbitrarily located for illustrative purposes only in the offset portion 404a of the magazine.

In operation, each container 200 (or container 8200) is loaded in a horizontal position/orientation into top entrance opening 315 of the magazine. Multiple containers may be loaded to form a stack of containers. Each container moves downwards from the top of magazine 350 in a vertical linear path along feed axis FX through the straight upper portion 404b of the magazine. The container then reaches and follows a staggered path through magazine offset portion 404a. The container first moves horizontally and enters into the top of offset portion 404a of the magazine (transversely to feed axis FX), vertically downwards through a short straight section of offset portion 404a of the magazine, and then horizontally into the bottom of the offset portion until it rolls onto cradle 355 from sloped feed surface 602 of the offset portion. Once in the cradle, the lowermost sample container is again inline with feed axis FX as shown and can be transitioned to the vertical position for feeding into container carousel 140 via the rotatable cradle 355.

Optionally, an additional magazine such as secondary container magazine 350a can be disposed above sample container magazine 350 at entrance opening 351 to extend the number of sample containers 200 or smart containers 8200 stored in sample container magazine 350. The additional magazine can be stacked on top of magazine 350 and coupled to the top of frame 111 above the apparatus magazine 350 at the entrance opening 351 (e.g., top plate 111c of outer cabinet 111a) such that containers 200 in magazine 350a. The containers are feed by gravity and drop into the top entrance opening of magazine 350 from secondary container magazine 350a. Whereas container magazine 350 holds the containers in a horizontal position and in vertically-stacked horizontal relationship (except for offset portion 404a previously described herein), the secondary container magazine 350a may hold in containers in horizontal abutting side-to-side relationship to minimize headspace requirements above the apparatus to accommodate the additional magazine. Magazine 350a comprises an inclined feed ramp 350b sloped towards entrance opening 351 of the lower magazine 350 inside cabinet 111a.

Before moving into position in the rotatable sample container carousel 140 from the lower container magazine 350 inside cabinet 111a and then beneath the compactor 130, sample container 200 is moved into a vertical position by rotating cradle 355 of the container feed mechanism 360, which is actuated by a bell and crank linkage 356 driven by actuator 357 coupled to the apparatus support frame 111. After filling, sample container 200 can be ejected through container exit opening 358 in the side of the apparatus support frame 111 (and cabinet 111a). This allows for a more compact design. Optionally, a magazine can be connected to exit opening 358 to collect sample containers 200 to allow for transport and delivery to the analysis systems described below.

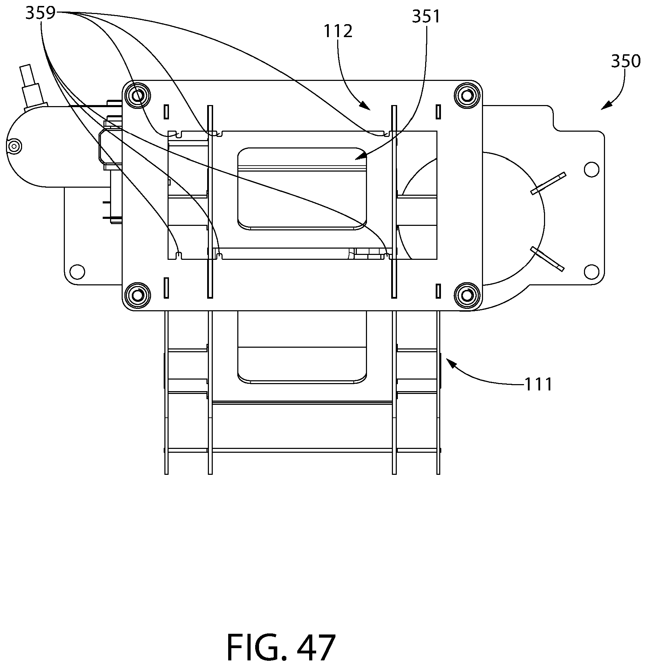

Optionally, to ensure proper orientation of sample container 200 in sample container magazine 350, a plurality of tabs 359 can be provided at opening 351 (see, e.g., FIG. 47). Corresponding circumferentially-extending grooves or notches 359a on sample tube 200 (example shown schematically on smart sample container 8200 in FIG. 34) can engage tabs 359. This ensures that tabs 359 and notches align so that sample container 200 or 8200 can only be inserted one way (i.e. position) into magazine 350. This in turn ensures that when the sample container is rotated to an upright position via cradle 355, the open end of the sample container 200 is at top for filling with the agricultural material such as soil in one embodiment in the compactor. An equal number of tabs and circumferential notches may therefore be provided. In one embodiment, three pairs of tabs 359 and grooves 359a may be provided. One of the notches 359a may serve as the circumferential restraint groove 146b previously described herein to restrain the sample container 200 during the sample container decapping operation.

Sample container magazine 350 can be detachable inserted and mounted into sample container system 300 such as on frame 111 inside cabinet 111a. This allows for quickly supplying sample containers 200 to sample container packaging apparatus of the container packaging system 300.

Optionally, a sensor (such as and similar to a presence sensor 381a or 381b) can be installed within sample container magazine 350 at a desired location to sense for presence of sample containers 200. Once only a few or no sample containers 200 are detected, an alert can be sent to notify an operator that sample container magazine 350 is out of or low on containers 200 so that the operator can refill sample container magazine 350 to continue processing soil samples.

In some embodiments, external cabinet 111a if provided is attached to and supported by the apparatus support frame 111. Threaded fasteners, clips, or other means may be used to detachably attached the cabinet members to the frame. Cabinet 111a may be configured to enclose at least some if not a majority of the components of soil sample packaging apparatus 310 (particularly electronics and smaller intricate components) for protection against dust, dirt, and moisture. Cabinet 111a may include one or more openable/closeable access panels 111b which may be hingedly mounted on the cabinet or fully removable therefrom to provide access to the sample packaging apparatus components therein. In one embodiment, as shown, the cabinet 111a may enclose at least portions of the grinder 120 mechanism, compactor 130 mechanism, and primary sample container magazine 350.

The grinder cover 372 and compactor funnel 333 are not enclosed inside cabinet 111a and remain exposed and externally-accessible for manual operation, The frame 111 and cabinet 111a collectively form a self-contained and self-supported soil sample packaging apparatus 310 which is readily transportable as a unit and usable in the field such as on a driven or pulled vehicle, or inside a controlled environment such as a building or other structure. Entrance opening 351 at the top of magazine 350 may be accessible through the top of cabinet 111a and a secondary sample container magazine 350a if provided may be mounted on the cabinet above the entrance opening.

The container carousel 140 previously described herein may be modified for agricultural sample packaging apparatus 350 in some embodiments. Carousel 340 in the present embodiment may replace upper disk 141 and lower disk 142 with pair of vertically spaced apart arms comprising an upper arm 341 and lower arm 342. The inside end of each arm is coupled to drive shaft 143b of the rotary drive mechanism 143. Each arm may be horizontally elongated and comprises a semi-circular container support member 341a, 342a which form the container holder 346, thereby replacing the prior sleeve-shaped sample container holder 146. Support members 341a, 342a are disposed on the opposite outside ends of the arms and laterally support the sample container 200 or 8200 for movement in sample packaging apparatus 310 as the carousel rotates the container in a first direction from the empty container loading station beneath container magazine 350 to the container sample compaction station beneath compactor 130, and thereafter in an opposite second direction towards the filled and compacted lateral container exit opening 358 in the apparatus support frame 111.

Carousel 340 may further comprise a pivotably movable kicker arm 344 operably linked to the container holder 346 (i.e. arms 341 and 342) via mechanical linkage 345. Referring to FIGS. 58-59, the kicker arm is configured and operable to retrieve the sample container (200 or 8200) from the container holder and push the sample container through the container exit opening 358 in the apparatus support frame 111 (e.g.,. cabinet 111a in one embodiment). Mechanical linkage 345 may be a triple jointed linkage which in one embodiment may comprise a hook-shaped working end segment 345a configured to engage the sample container, and an operating end segment 345b pivotably coupled at one end to segment 345a and at the other end between upper and lower arms 341, 342 via pivot pin 349. Segments 345a and 345b may be generally (but not perfectly) L-shaped in one embodiment as shown. Segment 345a defines the kicker arm 344 and is pivotably coupled to a part of the apparatus frame 111 via pivot pin 347. One end of segment 345a is pivotably coupled to segment 345b via pivot pin 348 forming a free-floating joint unconstrained by the apparatus frame as shown. The opposite end of segment 345a is engageable with the sample container being part of the kicker arm 344.

The mechanical linkage 345 is configured and operable such that rotating the container holder 346 on arms 341, 342 in one direction away from the container exit opening 358 of support frame 111/cabinet 111a (i.e. towards the empty container loading station and container sample compaction station) rotates the kicker arm in an opposite direct towards the container exit opening. Advantageously, this allows the carousel 340 to eject a filled sample container with compacts sample material (e.g., soil or other) simultaneously with moving the container holder to pick up a new empty sample container at the same time. This speeds up the container filling, compacting, and ejection operation.

The systems for processing and analyzing an agricultural sample 100 disclosed herein is usable with and may form part of an overall agricultural sampling and analysis systems, such as but not limited to those described in U.S. Patent Application Publication No. 2018/0124992A1 and PCT Publication No. WO2020/012369, and other systems are described in U.S. Application Nos. 62/983237, filed on 28 February 2020; 63/017789, filed on 30 April 2020; 63/017840, filed on 30 April 2020; 63/018120, filed on 30 April 2020; 63/018153, filed on 30 April 2020; 63/191159, filed on 20-May-2021; 63/191166, filed on 20-May-2021; 63/191172, filed on 20-May-2021; 17/326050, filed on 20-May-2021; 63/191186, filed on 20-May-2021; 63/191189, filed on 20-May-2021; 63/191195, filed on 20-May-2021; 63/191199, filed on 20-May-2021; 63/191204, filed on 20-May-2021; 17/343434, filed on 09-Jun-2021; 63/208865, filed on 09-Jun-2021; 17/343536, filed on 09-Jun-2021; 63/213319, filed on 22-Jun-2021; 63/260772 filed on 31-Aug-2021; 63/260776 filed on 31-Aug-2021; 63/260777 filed on 31-Aug-2021, 63/245278 filed on 17-Sept-2021; 63/264059 filed on 15-Nov-2021; 63/264062 filed on 15-Nov-2021; 63/264065 filed on 15-Nov-2021; and 63/369722, filed 28 July 2022; 63/369724, filed 28 July 2022; 63/369765, filed 28 July 2022; 63/369988, filed 01 August 2022; 63/489209, filed 09 March 2023; and 63/507,517, filed 12 June 2023; and PCT Application Nos. PCT/IB2021/051076, filed on 10 February 2021; PCT/IB2021/051077, filed on 10 February 2021; PCT/IB2021/052872, filed on 07 April 2021; PCT/IB2021/052874, filed on 07 April 2021; PCT/IB2021/052875, filed on 07 April 2021; PCT/IB2021/052876, filed on 07 April 2021; PCT/IB2023/050081, filed 5 January 2023; PCT/IB2023/050082, filed 5 January 2023; PCT/IB2023/050730, filed 27 January 2023; PCT/IB2023/050901, filed 2 February 2023; PCT/IB2023/051626, filed 22 February 2023; PCT/IB2023/051627, filed 22 February 2023; PCT/IB2023/052204, filed 08 March 2023; PCT/IB2023/052205, filed 8 March 2023; PCT/IB2022/058401, filed 7 September 2022; PCT/IB2022/058402, filed 7 September 2022; and PCT/IB2022/058408, filed 7 September 2022.

## Claims

1. An agricultural sample packaging apparatus (100, 310) comprising:
a grinder (120) configured to receive and grind an agricultural sample material;
a compactor (130) comprising a feed tube (132) configured to receive ground sample material from the grinder (120) and a plunger (131) linearly movable into and out of the feed tube;
a rotatable carousel (140) configured to removably hold a sample container (200), the carousel operable to receive and rotate the sample container beneath the feed tube;
a sample container magazine (350) configured to hold a plurality of sample containers (200), the container magazine including a container feed mechanism (360) configured to rotate horizontally positioned sample containers (200) to a vertical position for insertion into the rotatable carousel (140); wherein
when each sample container (200) is positioned beneath the feed tube (132), the plunger (131) is operable to pass through the feed tube (132) and compact the sample material into the sample container (200).

2. The apparatus (110, 310) according to claim 1, wherein the container magazine (350) is vertically elongated and configured to store the horizontally positioned sample containers (200) in vertically-stacked side-to-side relationship.

3. The apparatus (110, 310) according to claim 2, wherein the container feed mechanism (360) comprises a cradle (355) which receives a lowermost sample container (200) in the container magazine (350), the cradle (355) being rotatable by the container feed mechanism (360) between a horizontal loading position for receiving the lowermost sample container (200) in the horizontal position and a vertical feed position for changing the lowermost sample container (200) to a vertical position for insertion into the carousel (140).

4. The apparatus (110, 310) according to claim 3, wherein the cradle (355) comprises an arcuately curved container support surface which supports and engages the sample container (200) which is cylindrical.

5. The apparatus (110, 310) according to claims 3 or 4, wherein the container magazine (350) comprises an upper straight portion (404b) axially aligned with a vertical feed axis (FX) of the container magazine (350), and a lower offset portion (404a) which is not axially aligned with the vertical feed axis (FX).

6. The apparatus (110, 310) according to claim 5, wherein the container magazine (350) defines a non-linear container feed passageway (405) extending from a top of the container magazine (350) to a bottom of the container magazine (350).

7. The apparatus (100, 310) according to claim 5, wherein the lower offset portion (404b) comprises a sloped feed surface (602) configured to roll the lowermost sample container (200) onto the cradle (355) when in the loading position.

8. The apparatus (110, 310) according to claim 7, wherein the lower offset portion defines a headspace (404c) below which is configured to provide overhead clearance sufficient to allow the lowermost sample container (200) to be rotated from the horizontal position to the vertical position via the cradle (355).

9. The apparatus (110, 310) according to any one of claims 1-8, wherein the container feed mechanism (360) comprises a bell and crank linkage (356) coupled to the cradle (355) and controlled by an actuator (357) operable to change the cradle between the loading and feed positions.

10. The apparatus (110, 310) according to claim 2, further comprising a secondary sample container magazine (350a) detachably mounted on a frame (111) of the apparatus above the sample container magazine (350), the secondary sample container magazine (350a) configured to hold additional sample containers (200) therein in horizontally-abutting side-to-side relationship, optionally wherein the secondary sample container magazine (350a) comprises an inclined feed ramp (350b) sloped to cause the sample containers (200) therein to roll via gravity towards a top entrance opening (351) of the sample container magazine (350).

11. The apparatus (110, 310) according to any one of claims 1-10, wherein the container feed mechanism (360) is operable to vertically drop each sample container (200) into a container holder (346) of the carousel (340) below the sample container magazine (350), the carousel (340) being operable to rotate each sample container (200) in a first direction to a position beneath the feed tube (132) of the compactor (130).

12. The apparatus (110, 310) according to claim 11, wherein the carousel (340) is further operable to rotate each sample container (200) from beneath the feed tube (132) in an opposite second direction to a container exit opening (358) disposed on a lateral side of the apparatus.

13. The apparatus (110, 310) according to claim 11, wherein the carousel comprises a pivotably movable kicker arm operably linked to the container holder (346), the kicker arm (344) configured and operable to retrieve the sample container (200) from the container holder (346) and push the sample container (200) through the container exit opening (358), optionally wherein the kicker arm (344) comprises a mechanical linkage (345) pivotably coupled to the container holder (346), the mechanical linkage (345) being configured such that rotating the container holder (346) in one direction away from the container exit opening (358) rotates the kicker arm (344) in an opposite direct towards the container exit opening (358), optionally wherein the container holder (346) comprises a pair of vertically spaced apart semi-circular container support members (341a, 342a), the kicker arm (344) being rotatable between the container support members to retrieve the sample container (200).

14. The apparatus (110, 310) according to claim 1, wherein the grinder (120) comprises a rotatable grinder blade (126, 326) driven by a motor (124) to grind the agricultural sample material.

15. The apparatus (110, 310) according to claim 1, wherein the grinder (120), compactor (130), and container magazine (350) are mounted on a common support frame (111), optionally wherein the apparatus (110, 310) further comprises a cabinet (111a) with openable panels (111b) coupled to the common support frame (111), the container magazine (350) being disposed inside the cabinet (111a).

## Patentansprüche

1. Verpackungsvorrichtung für landwirtschaftliche Proben (100, 310), umfassend:
ein Mahlwerk (120), das dazu ausgelegt ist, ein landwirtschaftliches Probenmaterial aufzunehmen und zu mahlen;
einen Verdichter (130), umfassend ein Zufuhrrohr (132), das dazu ausgelegt ist, gemahlenes Probenmaterial von dem Mahlwerk (120) aufzunehmen, und einen Kolben (131), der linear in das Zufuhrrohr hinein und aus diesem heraus beweglich ist;
ein drehbares Karussell (140), das dazu ausgelegt ist, einen Probenbehälter (200) entfernbar zu halten, wobei das Karussell dazu betreibbar ist, den Probenbehälter unter dem Zufuhrrohr aufzunehmen und zu drehen;
ein Probenbehältermagazin (350), das dazu ausgelegt ist, eine Mehrzahl von Probenbehältern (200) zu halten, wobei das Behältermagazin einen Behälterzufuhrmechanismus (360) beinhaltet, der dazu ausgelegt ist, horizontal positionierte Probenbehälter (200) in eine vertikale Position zum Einführen in das drehbare Karussell (140) zu drehen; wobei
wenn jeder Probenbehälter (200) unter dem Zufuhrrohr (132) positioniert ist, der Kolben (131) dazu betreibbar ist, durch das Zufuhrrohr (132) hindurchzugehen und das Probenmaterial in den Probenbehälter (200) zu verdichten.

2. Vorrichtung (110, 310) nach Anspruch 1, wobei das Behältermagazin (350) vertikal länglich ist und dazu ausgelegt ist, die horizontal positionierten Probenbehälter (200) in vertikal gestapelter Seite-an-Seite-Beziehung zu lagern.

3. Vorrichtung (110, 310) nach Anspruch 2, wobei der Behälterzufuhrmechanismus (360) eine Wiege (355) umfasst, die einen untersten Probenbehälter (200) in dem Behältermagazin (350) aufnimmt, wobei die Wiege (355) durch den Behälterzufuhrmechanismus (360) zwischen einer horizontalen Ladeposition zum Aufnehmen des untersten Probenbehälters (200) in der horizontalen Position und einer vertikalen Zufuhrposition zum Überführen des untersten Probenbehälters (200) in eine vertikale Position zum Einführen in das Karussell (140) drehbar ist.

4. Vorrichtung (110, 310) nach Anspruch 3, wobei die Wiege (355) eine bogenförmig gekrümmte Behälterstützfläche umfasst, die den zylindrischen Probenbehälter (200) stützt und mit diesem in Eingriff steht.

5. Vorrichtung (110, 310) nach Anspruch 3 oder 4, wobei das Behältermagazin (350) einen oberen geraden Abschnitt (404b), der axial auf eine vertikale Zufuhrachse (FX) des Behältermagazins (350) ausgerichtet ist, und einen unteren versetzten Abschnitt (404a), der nicht axial auf die vertikale Zufuhrachse (FX) ausgerichtet ist, umfasst.

6. Vorrichtung (110, 310) nach Anspruch 5, wobei das Behältermagazin (350) einen nichtlinearen Behälterzufuhrdurchgang (405) definiert, der sich von einer Oberseite des Behältermagazins (350) zu einer Unterseite des Behältermagazins (350) erstreckt.

7. Vorrichtung (100, 310) nach Anspruch 5, wobei der untere versetzte Abschnitt (404b) eine geneigte Zufuhrfläche (602) umfasst, die dazu ausgelegt ist, den untersten Probenbehälter (200) auf die Wiege (355) zu rollen, wenn sie sich in der Ladeposition befindet.

8. Vorrichtung (110, 310) nach Anspruch 7, wobei der untere versetzte Abschnitt einen Kopfraum (404c) darunter definiert, der dazu ausgelegt ist, einen Freiraum nach oben bereitzustellen, der ausreicht, um zu ermöglichen, dass der unterste Probenbehälter (200) über die Wiege (355) von der horizontalen Position in die vertikale Position gedreht wird.

9. Vorrichtung (110, 310) nach einem der Ansprüche 1-8, wobei der Behälterzufuhrmechanismus (360) ein Winkelhebelgestänge (356) umfasst, das mit der Wiege (355) gekoppelt ist und durch einen Aktuator (357) gesteuert wird, der betreibbar ist, um die Wiege zwischen der Lade- und der Zufuhrposition zu verstellen.

10. Vorrichtung (110, 310) nach Anspruch 2, ferner umfassend ein sekundäres Probenbehältermagazin (350a), das abnehmbar an einem Rahmen (111) der Vorrichtung oberhalb des Probenbehältermagazins (350) montiert ist, wobei das sekundäre Probenbehältermagazin (350a) dazu ausgelegt ist, zusätzliche Probenbehälter (200) darin in horizontal anliegender Seite-an-Seite-Beziehung zu halten, wobei optional das sekundäre Probenbehältermagazin (350a) eine geneigte Zufuhrrampe (350b) umfasst, die geneigt ist, um zu bewirken, dass die Probenbehälter (200) darin mittels Schwerkraft in Richtung einer oberen Eintrittsöffnung (351) des Probenbehältermagazins (350) rollen.

11. Vorrichtung (110, 310) nach einem der Ansprüche 1-10, wobei der Behälterzufuhrmechanismus (360) betreibbar ist, um jeden Probenbehälter (200) vertikal in einen Behälterhalter (346) des Karussells (340) unterhalb des Probenbehältermagazins (350) fallen zu lassen, wobei das Karussell (340) betreibbar ist, um jeden Probenbehälter (200) in einer ersten Richtung in eine Position unterhalb des Zufuhrrohrs (132) des Verdichters (130) zu drehen.

12. Vorrichtung (110, 310) nach Anspruch 11, wobei das Karussell (340) ferner betreibbar ist, um jeden Probenbehälter (200) von unterhalb des Zufuhrrohrs (132) in eine entgegengesetzte zweite Richtung zu einer Behälteraustrittsöffnung (358) zu drehen, die auf einer lateralen Seite der Vorrichtung angeordnet ist.

13. Vorrichtung (110, 310) nach Anspruch 11, wobei das Karussell einen schwenkbar beweglichen Auswerferarm umfasst, der betriebsfähig mit dem Behälterhalter (346) verbunden ist, wobei der Auswerferarm (344) dazu ausgelegt und betreibbar ist, den Probenbehälter (200) aus dem Behälterhalter (346) zu entnehmen und den Probenbehälter (200) durch die Behälteraustrittsöffnung (358) zu schieben, wobei optional der Auswerferarm (344) ein mechanisches Gestänge (345) umfasst, das schwenkbar mit dem Behälterhalter (346) gekoppelt ist, wobei das mechanische Gestänge (345) derart ausgelegt ist, dass das Drehen des Behälterhalters (346) in einer Richtung weg von der Behälteraustrittsöffnung (358) den Auswerferarm (344) in einer entgegengesetzten Richtung zur Behälteraustrittsöffnung (358) hin dreht, wobei optional der Behälterhalter (346) ein Paar vertikal beabstandeter halbkreisförmiger Behälterstützelemente (341a, 342a) umfasst, wobei der Auswerferarm (344) zwischen den Behälterstützelementen drehbar ist, um den Probenbehälter (200) zu entnehmen.

14. Vorrichtung (110, 310) nach Anspruch 1, wobei das Mahlwerk (120) ein drehbares Mahlwerkmesser (126, 326) umfasst, das durch einen Motor (124) angetrieben wird, um das landwirtschaftliche Probenmaterial zu mahlen.

15. Vorrichtung (110, 310) nach Anspruch 1, wobei das Mahlwerk (120), der Verdichter (130) und das Behältermagazin (350) an einem gemeinsamen Stützrahmen (111) montiert sind, wobei optional die Vorrichtung (110, 310) ferner einen Schrank (111a) mit öffenbaren Platten (111b) umfasst, die mit dem gemeinsamen Stützrahmen (111) gekoppelt sind, wobei das Behältermagazin (350) innerhalb des Schranks (111a) angeordnet ist.

## Revendications

1. Appareil d'emballage d'échantillons agricoles (100, 310) comprenant :
un broyeur (120) conçu pour recevoir et broyer un échantillon de matériau agricole ;
un compacteur (130) comprenant un tube d'alimentation (132) conçu pour recevoir l'échantillon de matériau broyé provenant du broyeur (120) et un piston (131) mobile linéairement dans et hors du tube d'alimentation ;
un carrousel rotatif (140) conçu pour maintenir de manière amovible un récipient d'échantillon (200), le carrousel pouvant fonctionner pour recevoir et faire tourner le récipient d'échantillon sous le tube d'alimentation ;
un magasin de récipients d'échantillons (350) conçu pour contenir une pluralité de récipients d'échantillons (200), le magasin de récipients comprenant un mécanisme d'alimentation de récipients (360) conçu pour faire tourner des récipients d'échantillons positionnés horizontalement (200) vers une position verticale pour insertion dans le carrousel rotatif (140) ; dans lequel lorsque chaque récipient d'échantillon (200) est positionné sous le tube d'alimentation (132), le piston (131) peut fonctionner pour passer à travers le tube d'alimentation (132) et compacter l'échantillon de matériau dans le récipient d'échantillon (200).

2. Appareil (110, 310) selon la revendication 1, dans lequel le magasin de récipients (350) est allongé verticalement et conçu pour stocker les récipients d'échantillons positionnés horizontalement (200) dans une relation empilée verticalement côte à côte.

3. Appareil (110, 310) selon la revendication 2, dans lequel le mécanisme d'alimentation de récipients (360) comprend un berceau (355) qui reçoit un récipient d'échantillons le plus bas (200) dans le magasin de récipients (350), le berceau (355) pouvant être entraîné en rotation par le mécanisme d'alimentation de récipients (360) entre une position de chargement horizontale pour recevoir le récipient d'échantillons le plus bas (200) dans la position horizontale et une position d'alimentation verticale pour faire passer le récipient d'échantillon le plus bas (200) en position verticale dans le carrousel (140).

4. Appareil (110, 310) selon la revendication 3, dans lequel le berceau (355) comprend une surface de support de récipient incurvée en arc qui supporte et vient en prise avec le récipient d'échantillon (200) qui est cylindrique.

5. Appareil (110, 310) selon la revendication 3 ou 4, dans lequel le magasin de récipients (350) comprend une partie droite supérieure (404b) alignée axialement avec un axe d'alimentation vertical (FX) du magasin de récipients (350), et une partie décalée inférieure (404a) qui n'est pas alignée axialement avec l'axe d'alimentation vertical (FX).

6. Appareil (110, 310) selon la revendication 5, dans lequel le magasin de récipients (350) définit un passage d'alimentation de récipients non linéaire (405) s'étendant d'un sommet du magasin de récipients (350) à un fond du magasin de récipients (350).

7. Appareil (100, 310) selon la revendication 5, dans lequel la partie décalée inférieure (404b) comprend une surface d'alimentation inclinée (602) conçue pour faire rouler le récipient d'échantillon le plus bas (200) sur le berceau (355) lorsqu'il est dans la position de chargement.

8. Appareil (110, 310) selon la revendication 7, dans lequel la partie décalée inférieure définit un vide (404c) en dessous qui est conçu pour fournir un dégagement supérieur suffisant pour permettre au récipient d'échantillon le plus bas (200) d'être tourné de la position horizontale à la position verticale par le biais du berceau (355).

9. Appareil (110, 310) selon l'une quelconque des revendications 1 à 8, dans lequel le mécanisme d'alimentation de récipients (360) comprend une liaison à levier coudé (356) accouplée au berceau (355) et commandée par un actionneur (357) pouvant fonctionner pour commuter le berceau entre les positions de chargement et d'alimentation.

10. Appareil (110, 310) selon la revendication 2, comprenant en outre un magasin de récipients d'échantillons secondaire (350a) monté de manière détachable sur un cadre (111) de l'appareil au-dessus du magasin de récipients d'échantillons (350), le magasin de récipients d'échantillons secondaire (350a) étant conçu pour retenir en son sein des récipients d'échantillons supplémentaires (200) en butée horizontale côte à côte, facultativement, le magasin de récipients d'échantillons secondaire (350a) comprenant une rampe d'alimentation en pente (350b) inclinée pour faire rouler les récipients d'échantillons (200) qui s'y trouvent par gravité vers une ouverture d'entrée supérieure (351) du magasin de récipients d'échantillons (350).

11. Appareil (110, 310) selon l'une quelconque des revendications 1 à 10, dans lequel le mécanisme d'alimentation de récipients (360) peut être actionné pour faire tomber verticalement chaque récipient d'échantillon (200) dans un porte-récipient (346) du carrousel (340) au-dessous du magasin de récipients d'échantillons (350), le carrousel (340) pouvant être actionné pour faire tourner chaque récipient d'échantillon (200) dans une première direction vers une position au-dessous du tube d'alimentation (132) du compacteur (130).

12. Appareil (110, 310) selon la revendication 11, dans lequel le carrousel (340) peut en outre être actionné pour faire tourner chaque récipient d'échantillon (200) depuis le dessous du tube d'alimentation (132) dans une seconde direction opposée vers une ouverture de sortie de récipient (358) disposée sur un côté latéral de l'appareil.

13. Appareil (110, 310) selon la revendication 11, dans lequel le carrousel comprend un bras éjecteur mobile de manière pivotante relié fonctionnellement au porte-récipient (346), le bras éjecteur (344) étant conçu et pouvant fonctionner pour récupérer le récipient d'échantillon (200) du porte-récipient (346) et pousser le récipient d'échantillon (200) à travers l'ouverture de sortie de récipient (358), facultativement dans lequel le bras éjecteur (344) comprend une liaison mécanique (345) accouplée de manière pivotante au porte-récipient (346), la liaison mécanique (345) étant conçue de telle sorte que la rotation du porte-récipient (346) dans une direction opposée à l'ouverture de sortie du récipient (358) fait tourner le bras éjecteur (344) dans une direction opposée vers l'ouverture de sortie du récipient (358), le porte-récipient (346) comprenant facultativement une paire d'éléments de support de récipient semi-circulaires espacés verticalement (341a, 342a), le bras éjecteur (344) pouvant tourner entre les éléments de support de récipient pour récupérer le récipient d'échantillon (200).

14. Appareil (110, 310) selon la revendication 1, dans lequel le broyeur (120) comprend une lame de broyeur rotative (126, 326) entraînée par un moteur (124) pour broyer l'échantillon de matériau agricole.

15. Appareil (110, 310) selon la revendication 1, dans lequel le broyeur (120), le compacteur (130) et le magasin de récipients (350) sont montés sur un cadre de support commun (111), l'appareil (110, 310) comprenant facultativement en outre une armoire (111a) avec des panneaux ouvrants (111b) accouplés au cadre de support commun (111), le magasin de récipients (350) étant disposé à l'intérieur de l'armoire (111a).
